# EUROPEAN PATENT SPECIFICATION

(11) **EP 4 261 676 B1**
(45) Date of publication and mention of the grant of the patent: **24.06.2026**
(21) Application number: 22742014.8
(22) Date of filing: 05.01.2022
(51) Int. Cl.: G06F 9/54, G06F 8/61, G06F 9/50, G06F 9/48

(54) **DISTRIBUTED APPLICATION PROCESSING METHOD AND APPARATUS**
VERFAHREN UND VORRICHTUNG ZUR VERARBEITUNG VERTEILTER ANWENDUNGEN
PROCÉDÉ ET APPAREIL DE TRAITEMENT D'APPLICATION DISTRIBUÉE

(30) Priority: 22.01.2021 CN 202110090270
(43) Date of publication of application: 18.10.2023
(73) Proprietor: Huawei Technologies Co., Ltd., Shenzhen, Guangdong 518129 (CN)
(72) Inventor: BI, Sheng, Shenzhen, Guangdong 518129 (CN); NI, Zhaojun, Shenzhen, Guangdong 518129 (CN)
(74) Representative: Epping - Hermann - Fischer
(86) International application number: PCT/CN2022/070318
(87) International publication number: WO 2022/156535

(56) References cited:
- CN-A- 105 446 760
- CN-A- 106 886 434
- CN-A- 110 825 532
- CN-A- 112 241 316
- US-A1- 2009 222 504
- US-A1- 2011 138 015
- US-A1- 2015 278 374
- US-A1- 2016 274 999
- ANONYMOUS: "Distributed operating system - Wikipedia", 15 December 2020 (2020-12-15), XP093104834, Retrieved from the Internet <URL:https://web.archive.org/web/20201215035229/https://en.wikipedia.org/wiki/Distributed_operating_system> [retrieved on 20231123]

## Description

### TECHNICAL FIELD

This application relates to the field of communication technologies, and in particular, to a distributed application processing method and an apparatus.

### BACKGROUND

To meet requirements for smart life in all scenarios in the future, a distributed operating system (operating system, OS) is developed. Different from a conventional OS for a single device, the distributed OS is an OS for a plurality of devices. Main functions of the distributed OS include: distributed task scheduling, distributed data management, hardware capability virtualization, and a function of providing a distributed soft bus. The hardware capability virtualization is for sharing resources, and the distributed soft bus connects different terminals. In this way, capabilities are shared between terminals, providing optimal collaboration experience.

In a common home scenario, the distributed OS can implement interconnection between a mobile phone, a tablet computer, a TV, and a router, and a plurality of interconnected devices may collaborate to implement one or more functions. A function completed by using a plurality of devices in collaboration may be referred to as a distributed function. Currently, the distributed function is preset in a device, and is a pre-installed function of a system. Consequently, the distributed function has poor portability.

US 2011/138015 A1 describes a method involving a content server, a first device, a second device and an intercept server having a detection module and a proxy module. The detection module detects requests from the first access module to download content in the content server, and the proxy module instructs a download manager of the content server to transmit the content to the selected destinations such as the second device.

### SUMMARY

The invention is set out in the appended set of claims. Embodiments of this application provide a distributed application processing method and an apparatus, so that functions of an app can be installed on a plurality of electronic devices in a distributed manner, and the plurality of electronic devices jointly complete the functions of the app, thereby improving portability of the distributed functions.

According to a first aspect, an embodiment of this application provides a distributed application processing method, where the method is performed by a first device, the first device includes a distributed application, the distributed application includes a plurality of function modules, a first type of function module in the plurality of function modules is installed on the first device, a second type of function module in the plurality of function modules is installed on a subordinate device, the first device communicates with at least one subordinate device by using a distributed operating system OS, and the first device is a device that downloads an installation file of the distributed application.

The method includes: listening to a first task processing request, where the first task processing request is used to request to process a first task; determining, based on the first task processing request, one from the at least one subordinate device as a target device that processes the first task; and sending a task processing command to the target device, and receiving a processing result of the first task from the target device.

According to the method provided in the first aspect, for the task processing request triggered on the first device on which the distributed app is installed, a subordinate device on which the distributed app is installed may process the task processing request, and return a task processing result to the first device, so that a function of the app is jointly completed by using the plurality of electronic devices, thereby improving portability of the distributed function.

In a possible design, some function modules of the first type of function module and the second type of function module are the same.

In a possible design, the determining one from the at least one subordinate device as the target device that processes the first task includes: displaying a first interface when at least two subordinate devices in the at least one subordinate device can process the first task, where the first interface includes options of the at least two subordinate devices; and receiving a first selection operation performed by a user on the options of the at least two subordinate devices, and determining a subordinate device corresponding to the first selection operation as the target device.

The first interface is presented to the user, and the user selects, by using the first interface, a specific device that processes the task processing request, thereby bringing better experience to the user.

In a possible design, the method further includes: displaying a processing result of the first task.

In a possible design, the method further includes: determining to perform distributed installation on the distributed application, determining a subordinate device on which the distributed application is to be installed and a function module of the distributed application to be installed on the subordinate device, and sending an installation file corresponding to the function module of the distributed application to the corresponding subordinate device.

In a possible design, the determining to perform distributed installation on the distributed application includes: detecting that the installation file of the distributed application includes first indication information, where the first indication information indicates that the distributed application supports a distributed function; and determining, based on the first indication information, to perform distributed installation on the distributed application.

In a possible design, the determining to perform distributed installation on the distributed application includes: detecting that the installation file of the distributed application includes first indication information, where the first indication information indicates that the distributed application supports a distributed function; displaying a second interface based on the first indication information, where the second interface includes a distributed installation option; and receiving a confirmation operation performed by the user on the distributed installation option, and determining, based on the confirmation operation, to perform distributed installation on the distributed application.

In a possible design, the determining a subordinate device on which the distributed application is to be installed and a function module of the distributed application to be installed on the subordinate device includes: displaying a third interface, where the third interface includes a candidate device on which the distributed application can be installed and an option of a function module that can be installed on each candidate device; receiving a second selection operation performed by the user on the function module that can be installed on the candidate device, and determining, based on the second selection operation, the subordinate device on which the distributed application is to be installed and the function module to be installed on the subordinate device.

In a possible design, the determining a subordinate device on which the distributed application is to be installed and a function module of the distributed application to be installed on the subordinate device includes: displaying a fourth interface, where the fourth interface includes an option of a candidate device on which the distributed application can be installed; receiving a third selection operation performed by the user on the candidate device, and determining, based on the third selection operation, the subordinate device on which the distributed application is to be installed; displaying a fifth interface, where an option of the function module that can be installed on the subordinate device is displayed in the fifth interface; and receiving a fourth selection operation performed by the user on the function module that can be installed on the subordinate device, and determining the function module to be installed on the subordinate device based on the fourth operation.

In a possible design, after the sending an installation file corresponding to the function module of the distributed application to the corresponding subordinate device, the method further includes: when receiving installation completion response messages returned by all subordinate devices, confirming that the distributed application is successfully installed; and displaying a fifth interface, where the fifth interface is used to notify that the installation of the distributed application is completed.

A second aspect of this application provides a distributed application processing method, where the method is performed by a first device, the first device includes a distributed application, the distributed application includes a plurality of function modules, a first type of function module in the plurality of function modules is installed on the first device, a second type of function module in the plurality of function modules is installed on at least one subordinate device, the first device communicates with the at least one subordinate device by using a distributed operating system OS, and the first device is a device that downloads an installation file of the distributed application. The method includes: receiving a task state query request entered by a user, where the task state query request is used to request to query a state of a task currently processed in the distributed application; determining, based on the task state query request, a second device having a task processing function from the at least one subordinate device; and requesting the second device for a state of the task processed by the second device, and displaying the state of the task processed by the second device.

A query interface is provided for a user to query a state of tasks processed by each device, thereby helping the user to know the task state.

In a possible design, some function modules of the first type of function module and the second type of function module are the same.

In a possible design, the method further includes: receiving a task delete request entered by the user based on the state of the task processed by the second device; and sending the task delete request to the second device.

In a possible design, the method further includes: receiving a task suspension request entered by the user based on the state of the task processed by the second device; and sending the task suspension request to the second device.

A third aspect of this application provides a distributed application processing method, where the method is performed by a first device, the first device includes a distributed application, the distributed application includes a plurality of function modules, a first type of function module in the plurality of function modules is installed on the first device, a second type of function module in the plurality of function modules is installed on a subordinate device, the first device communicates with at least one subordinate device by using a distributed operating system OS, and the first device is a device that downloads an installation file of the distributed application. The method includes: receiving a management request entered by a user, and displaying, based on the management request, a subordinate device on which the distributed application is installed and a function module installed on the first device.

In the method, a function module of a distributed application can be flexibly managed, and a function module on each device can be flexibly adjusted, for example, a function module of a device is added or deleted. For a specific implementation, refer to the following.

In a possible design, some function modules of the first type of function module and the second type of function module are the same.

In a possible design, the method further includes: receiving a function module addition request entered by the user; and when the function module addition request is used to add a function module to a first device, installing the added function module on the first device based on the function module addition request; or when the function module addition request is used to add a function module to a subordinate device, sending the function module addition request to the subordinate device to which the function module needs to be added.

In a possible design, after the installing the added function module on the first device based on the function module addition request, the method further includes: updating information of the function module installed on the first device. In a possible design, after the sending the function module addition request to the subordinate device to which the function module needs to be added, the method further includes: receiving a function module addition response sent by the subordinate device; and based on the function module addition response, updating information that is stored in the first device and that is of the function module installed on the subordinate device.

In a possible design, the method further includes: receiving a function module delete request entered by the user; and when the function module delete request is used to delete a function module from the first device, deleting, based on the function module delete request, the corresponding function module from the first device; or when the function module addition request is used to delete a function module from a subordinate device, sending the function module delete request to the subordinate device from which the function module needs to be deleted.

In a possible design, after the deleting a corresponding function module from the first device based on the function module delete request, the method further includes: updating information of the function module installed on the first device.

In a possible design, after the sending the function module delete request to the subordinate device from which the function module needs to be deleted, the method further includes: receiving a function module delete response sent by the subordinate device; and based on the function module delete response, updating information that is stored in the first device and that is of the function module installed on the subordinate device.

According to a fourth aspect, an embodiment of this application provides a distributed application processing method, where the method is performed by a subordinate device of a distributed application, the distributed application includes a plurality of function modules, a first type of function module in the plurality of function modules is installed on a first device, a second type of function module in the plurality of function modules is installed on the subordinate device, the first device is a device that downloads an installation file of the distributed application, and the first device communicates with at least one subordinate device by using a distributed operating system OS. The method includes: receiving an installation file that is of at least one function module of the distributed application and that is sent by the first device; and installing a corresponding function module based on the installation file of the at least one function module.

A master device sends some function modules of a distributed application to a subordinate device, and the subordinate device installs the corresponding function modules, so that the master device and the subordinate device jointly implement a function of the distributed app.

In a possible design, some function modules of the first type of function module and the second type of function module are the same.

In a possible design, the method further includes: listening to a first task processing request, where the first task processing request is used to request to process a first task; determining, based on the first task processing request, a target device that processes the first task; sending a task processing command to the target device; and receiving a result of processing the first task by the target device.

In a possible design, the determining, based on the first task processing request, a target device that processes the first task includes: requesting, from the first device, a subordinate device that can process the first task; displaying a first interface when at least two subordinate devices can process the first task, where the first interface includes options of the at least two subordinate devices; and receiving a first selection operation performed by a user on the options of the at least two subordinate devices, and determining a subordinate device corresponding to the first selection operation as the target device.

In a possible design, the method further includes: receiving a task state query request entered by the user, where the task state query request is used to request to query a state of a task currently processed in the distributed application; determining, based on the task state query request, a second device having a task processing function; requesting, from the second device, a state of a task processed by the second device; and displaying the state of the task processed by the second device.

In a possible design, the method further includes: receiving a task delete request entered by the user based on the state of the task processed by the second device; and sending the task delete request to the second device.

In a possible design, the method further includes: receiving a task suspension request entered by the user based on the state of the task processed by the second device; and sending the task suspension request to the second device.

In a possible design, the method further includes: receiving a task processing command sent by the first device, where the task processing command is used to indicate to process a first task; processing the first task according to the task processing command; and sending a processing result of the first task to the first device.

In a possible design, the method further includes: receiving a function module addition request sent by the first device; installing an added function module on the subordinate device based on the function module addition request; and sending a function module addition response to the first device.

In a possible design, the method further includes: receiving a function module delete request sent by the first device; deleting a corresponding function module from the subordinate device based on the function module delete request; and sending a function module delete response to the first device.

According to a fifth aspect, an embodiment of this application provides an electronic device including a memory and a processor, the memory is configured to store program instructions, and the processor is configured to invoke the program instructions in the memory to enable the electronic device to perform the distributed application processing method according to any one of the first aspect to the fourth aspect of this application.

According to a sixth aspect, an embodiment of this application provides a computer-readable storage medium. The computer-readable storage medium stores a computer program. When the computer program is executed by a processor, the electronic device is enabled to implement the distributed application processing method according to any one of the first aspect to the fourth aspect of this application.

According to the distributed application processing method and apparatus provided in this application, a distributed app is installed on a plurality of electronic devices, and the plurality of electronic devices jointly complete a function of the distributed app. A first device on which the distributed app is downloaded and installed can listen to a task processing request, find a second device having a task processing function based on the task processing request, and then request the second device to process a task. After processing the task, the second device returns a task processing result to the first device, so that distributed task processing can be implemented. According to the method, a distributed function is implemented by using a distributed app, thereby improving portability of the distributed function. Any electronic device on which a distributed OS is installed can install the distributed app, to obtain the distributed function provided by the distributed app, thereby reducing development difficulty and costs of a distributed service.

### BRIEF DESCRIPTION OF DRAWINGS

FIG. 1 is a schematic diagram of a structure of an electronic device applicable in this application;
FIG. 2 is a block diagram of a software structure of an electronic device according to an embodiment of this application;
FIG. 3 is a schematic diagram of an installation network corresponding to a distributed app in a smart home scenario;
FIG. 4(a) to FIG. 4(c) are a schematic diagram of a distributed app installation process;
FIG. 5(a) to FIG. 5(d) are another schematic diagram of a distributed app installation process;
FIG. 6 is a schematic diagram of function module selection in a distributed app installation process;
FIG. 7(a) and FIG. 7(b) are another schematic diagram of function module selection in a distributed app installation process;
FIG. 8(a) to FIG. 8(c) are still another schematic diagram of function module selection in a distributed app installation process;
FIG. 9 is a schematic diagram of an installation completed interface of a distributed app;
FIG. 10 is a flowchart of executing a task by a distributed app;
FIG. 11 is a schematic diagram of a download selection page;
FIG. 12 is another schematic diagram of a download selection page;
FIG. 13 is still another schematic diagram of a download selection page;
FIG. 14 is yet another schematic diagram of a download selection page;
FIG. 15 is a schematic diagram of a download input box;
FIG. 16 is a schematic diagram of a selection interface of a task processing device;
FIG. 17 is a schematic flowchart of querying a task state in a distributed app;
FIG. 18 is a flowchart of application management of a distributed app;
FIG. 19(a) to FIG. 19(c) are a schematic diagram of accessing an application management portal of a distributed app;
FIG. 20(a) and FIG. 20(b) are a schematic diagram of a management page of a function module of a distributed app installed on each device;
FIG. 21 is a schematic diagram of a structure of a distributed application processing apparatus according to an embodiment of this application;
FIG. 22 is a schematic diagram of a structure of a distributed application processing apparatus according to an embodiment of this application; and
FIG. 23 is a schematic diagram of a structure of an electronic device according to an embodiment of this application.

### DESCRIPTION OF EMBODIMENTS

In embodiments of this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, terms "first" and "second" are merely used for a purpose of description, and shall not be understood as an indication or implication of relative importance. The terms "center", "vertical", "horizontal", "up", "down", "left", "right", "front", "back", and the like indicate an orientation or a position relationship based on an orientation or a position relationship shown in the accompanying drawings, and are merely intended to facilitate description of embodiments of this application and simplify description, but do not indicate or imply that a specified apparatus or element needs to have a specific orientation and be constructed and operated in a specific orientation. Therefore, this cannot be understood as a limitation on embodiments of this application.

An embodiment of this application provides a distributed application processing method. A distributed app may run on a plurality of electronic devices on which a distributed OS is installed. The distributed app is an app whose function may be jointly implemented by a plurality of devices. The plurality of devices communicate with each other by using a distributed OS. Installation, running, and management of the distributed app are supported based on configuration of an application layer and an application framework layer in a software system of an electronic device. A distributed function or a distributed service is implemented by using the distributed app, thereby improving portability of the distributed function. Any electronic device on which a distributed OS is installed can install the distributed app, so as to obtain a distributed service provided by the distributed app, and reduce development difficulty and costs of the distributed service.

For example, the electronic device may be a tablet computer, a mobile phone (such as a fordable smartphone and a large screen mobile phone), a laptop computer, a wearable device, a vehicle-mounted device, an augmented reality (augmented reality, AR)/virtual reality (virtual reality) device, an ultra-mobile personal computer (ultra-mobile personal computer, UMPC), a netbook, a personal digital assistant (personal digital assistant, PDA), a smart TV, a smart screen, a high-definition TV, a 4K TV, a smart sound box, a smart projector, or the like. A specific type of the electronic device is not limited in embodiments of this application.

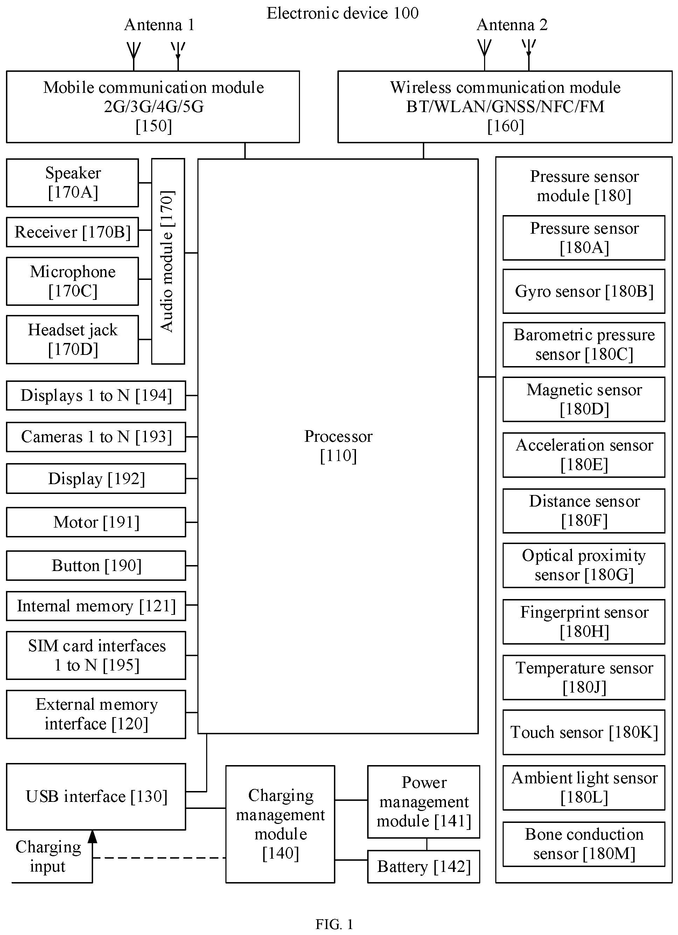

The following uses an example in which the electronic device is a tablet computer to describe an electronic device in an embodiment of this application with reference to FIG. 1.

FIG. 1 is a schematic diagram of a structure of an electronic device applicable in this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a button 190, a motor 191, an indicator 192, a camera 193, a display 194, a subscriber identity module (subscriber identity module, SIM) card interface 195, and the like. It may be understood that the structure illustrated in this embodiment does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), a neural-network processing unit (neural-network processing unit, NPU), and/or the like. Different processing units may be independent components, or may be integrated into one or more processors. In some embodiments, the electronic device 100 may also include one or more processors 110. The controller may be a nerve center and a command center of the electronic device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access and reduces a waiting time of the processor 110, so that system efficiency of the electronic device 100 is improved. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB interface 130 is an interface that conforms to USB standard specifications, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset.

It may be understood that an interface connection relationship between the modules shown in this embodiment of the present invention is merely used as an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device 100 through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier, and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transfers the low-frequency baseband signal obtained through demodulation to the baseband processor for processing. After being processed by the baseband processor, the low-frequency baseband signal is transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that includes a wireless local area network (wireless local area networks, WLAN), Bluetooth, a global navigation satellite system (global navigation satellite system, GNSS), frequency modulation (frequency modulation, FM), NFC, an infrared (infrared, IR) technology, or the like and that is applied to the electronic device 100. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a GSM, a GPRS, CDMA, WCDMA, TD-SCDMA, LTE, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, one or more cameras 193, the video codec, the GPU, one or more displays 194, the application processor, and the like.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The DPU is also referred to as a display sub-system (display sub-system, DSS). The DPU is configured to adjust a color of the display 194, and the DPU may adjust the color of the display by using a three-dimensional lookup table (3D lookup table, 3D LUT). The DPU can also perform, on an image, scaling, noise reduction, contrast enhancement, backlight brightness management, HDR processing, display parameter Gamma adjustment, and the like.

The external memory interface 120 may be used to connect to an external storage card, for example, a micro SD card, to extend a storage capability of the electronic device 100. The external memory card communicates with the processor 110 by using the external memory interface 120, to implement a data storage function. For example, data files such as music, a photo, and a video are stored in the external memory card.

The internal memory 121 may be configured to store one or more computer programs, and the one or more computer programs include instructions. The processor 110 runs the instructions stored in the internal memory 121, to enable the electronic device 100 to perform various function applications and data processing. The internal memory 121 may include a program storage area and a data storage area. The program storage area may store an operating system. The program storage area may further store one or more applications (for example, "Gallery" and "Contacts"), and the like. The data storage area may store data (such as photos and contacts) created during use of the electronic device 100, and the like. In addition, the internal memory 121 may include a high-speed random access memory, or may include a nonvolatile memory, for example, at least one magnetic disk storage device, a flash memory, or universal flash storage (universal flash storage, UFS), and the like. In some embodiments, the processor 110 runs instructions stored in the internal memory 121 and/or instructions stored in the memory disposed in the processor 110, to enable the electronic device 100 to perform various function applications and data processing.

The electronic device 100 may implement an audio function by using the audio module 170, the speaker 170A, the receiver 170B, the microphone 170C, the headset jack 170D, and the application processor, for example, music playing and recording. The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110. The speaker 170A, also referred to as a "loudspeaker", is configured to convert an audio electrical signal into a sound signal. The electronic device 100 may be used to listen to music or answer a call in a hands-free mode over the speaker 170A. The receiver 170B, also referred to as an "earpiece", is configured to convert an audio electrical signal into a sound signal. When a call is answered or speech information is received through the electronic device 100, the receiver 170B may be put close to a human ear to listen to a voice. The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor 180 may include a pressure sensor 180A, a gyro sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario, a motion-controlled gaming scenario, and the like.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H (also referred to as a fingerprint recognizer) is configured to collect a fingerprint. The electronic device 100 may use a feature of the collected fingerprint to implement fingerprint-based unlocking, application lock access, fingerprint-based photographing, fingerprint-based call answering, and the like. In addition, for other records about the fingerprint sensor, refer to the international patent application PCT/CN2017/082773 entitled "NOTIFICATION PROCESSING METHOD AND ELECTRONIC DEVICE", which is incorporated herein by reference in its entirety.

The touch sensor 180K may also be referred to as a touch panel or a touch-sensitive surface. The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. A type of an operating system of the electronic device is not limited in this embodiment of this application, for example, an Android system, a Linux system, a Windows system, an iOS system, a harmony operating system (harmony operating system, HarmonyOS), or the like. In an embodiment of this application, an Android system with a layered architecture is used as an example to describe a software structure of the electronic device 100.

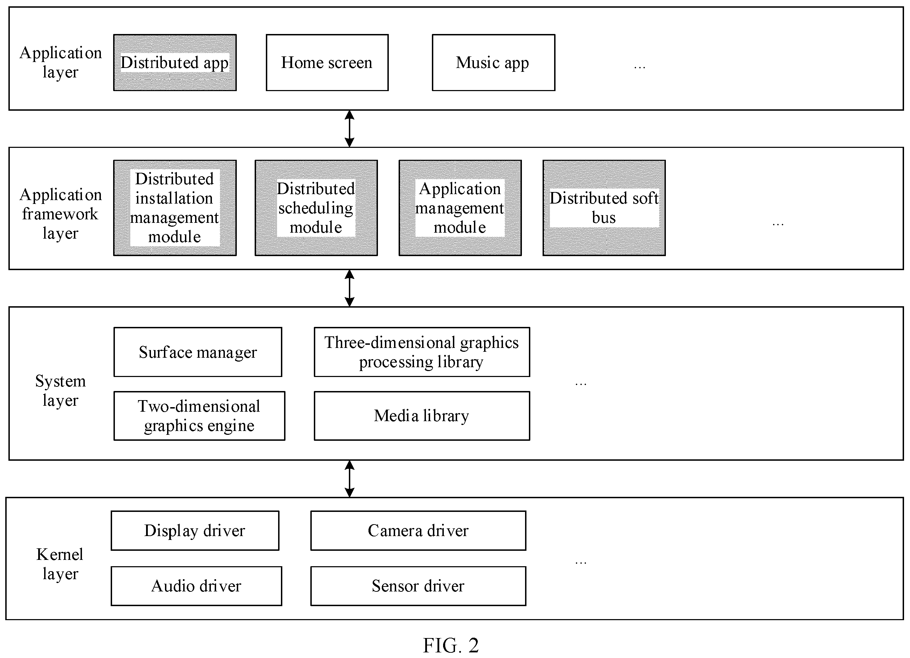

FIG. 2 is a block diagram of a software structure of an electronic device according to an embodiment of this application. As shown in FIG. 2, in a layered architecture, a software system is divided into several layers, and each layer has a clear role and task. The layers communicate with each other through a software interface. In some embodiments, an Android system is divided into four layers: an application layer, an application framework layer (APP framework), an Android runtime (Android runtime) and a system library (library), and a kernel layer from top to bottom.

The application layer may include a series of application packages.

As shown in FIG. 2, the application packages may include applications (applications, APPs) such as "E-mail", "Camera", "Gallery", "Calendar", "Phone", "Map", "Navigation", "WLAN", "Bluetooth", "Music", "Videos", "Game", "Chat", "Shopping", "Traveling", "Instant Messaging" (such as "Short Messaging"), "Smart Home", and "Device Control".

The Smart Home application may be used to control or manage a home device having a networking function. For example, the home device may include an electric light, a TV, and an air conditioner. For another example, the home device may further include an anti-theft door lock, a sound box, a floor sweeping robot, a socket, a body fat scale, a desk lamp, an air purifier, a refrigerator, a washing machine, a water heater, a microwave oven, an electric cooker, a curtain, a fan, a TV, a set-top box, a door, and a window.

Generally, applications can be classified into system applications and third-party applications. The system application may be understood as an application that is not independent and depends on a software system, for example, a dock and a home screen. The third-party application is an application other than a system application, and may include but is not limited to a self-developed application of a device vendor, an application of a non-device vendor, and the like, for example, an electronic device application and a computer application. For ease of description, an example in which the application layer includes a distributed APP is used for illustration.

The application framework layer provides an application programming interface (application programming interface, API) and a programming framework for an application at the application layer. The application framework layer includes some predefined functions.

As shown in FIG. 2, the application framework layer may include a distributed soft bus, a distributed installation management module, a distributed scheduling module, an application management module, and the like. For ease of description, an example in which the application framework layer includes the distributed installation management module, the distributed scheduling module, and the application management module is used for illustration. The distributed soft bus, distributed installation management module, distributed scheduling module, and application management module are all software modules.

The distributed soft bus is configured to integrate hardware resources into a hardware pool to implement hardware interconnection and mutual use of hardware resources, providing basic communication functions for other distributed services.

The distributed installation management module is used to implement installing, managing, uninstalling, and data querying of the distributed app on a plurality of devices.

The distributed scheduling module is configured to provide a cross-device scheduling capability, and is responsible for communication between application components on a plurality of devices on which the distributed app is installed, and communication between the application components on the plurality of devices and an OS.

The application management module is configured to manage functions that are of the distributed app and that are installed on the plurality of devices. For example, after the distributed app is installed, a function installed on a device may be viewed, deleted, or added.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a working process of software and hardware of the electronic device 100 by using an example with reference to a scenario in which a sound is played by using a smart sound box.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control of an icon of the smart sound box. A smart sound box application invokes an interface of the application framework layer to start the smart sound box application, so as to start an audio driver by invoking the kernel layer, and convert an audio electrical signal into a sound signal by using the speaker 170A.

It may be understood that the structure illustrated in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

Based on the preceding description, distributed app processing includes the following four phases in time sequence: app development, app installation, app running, and app management.

App development is also called app packaging. A device vendor releases a set of distributed OSs supporting interconnection between a plurality of devices, such as a mobile phone, a tablet, a TV, and a router. In addition, a set of developer manuscripts is released. An app developer can develop, based on the developer manuscripts, an app that can be installed on the distributed OS and has a distributed function.

In the app development phase, a developer modularizes an installation file of the distributed app based on functions and requirements provided by the distributed app for installing on a plurality of devices. Modules on the plurality of devices collaborate to implement the functions of the app.

Usually, the distributed app includes the following modules: a basic module, a task management module, a task listening module, a task processing module, a resource file, a module configuration file, and another module.

The basic module is used to provide a runtime environment for other modules. The basic module itself does not provide a function. The task management module is configured to provide a management interface for a user. The management interface is configured to manage and monitor a task on a device on which the task processing module is installed. For example, a state of the task on the device is displayed to the user through the management interface, where the state of the task includes: being processed, processing failed, processing completed, and the like. The user can delete a failed task and suspend a task that is being processed.

The task listening module is used to listen to context of the user and provide user experience (User Experience, UX) interaction for task adding processing.

The task processing module is used to perform a task processing function on the device to complete a specific task of the distributed app. For example, the distributed app is a distributed download app. In this case, the task processing module is a download module, and the download module is used to complete a download function of the distributed app.

The resource file is used to describe whether an app supports the distributed function. In a subsequent installation phase, the device that downloads the app can determine whether the app supports the distributed function based on the configuration file and perform distributed installation. Distributed installation means that the app function is installed on a plurality of devices.

The module configuration file is used to store information of each module, and the information of the module includes a function of the module.

After development of the distributed app is completed, a user may download and install the distributed app on an electronic device, where the electronic device may be user equipment (user equipment, UE), such as a mobile phone or a computer, or may be a cellular phone, a cordless phone, a session initiation protocol (session initiation protocol, SIP for short) phone, a smartphone, a personal digital assistant (personal digital assistant, PDA for short), a computer, a laptop computer, a handheld communication device, a handheld computing device, a satellite wireless device, a wireless modem card, a set top box (set top box, STB for short), a vehicle-mounted device, a wearable device (such as a smart watch, a smart band, or smart glasses), a smart home device, another device configured to perform communication in a wireless system, or the like.

A mobile phone is used as an example. An application store or an application market is provided for the user. The application store or the application market provides various apps for the user to download, for example, various social apps, news apps, shopping apps, game apps, and the like. The user may search for a to-be-installed distributed app by using a search function provided by the application store or the application market, tap a download control to download the app, and then tap an installation control to install the app. Currently, to facilitate a user operation, two functions, namely, download and installation, are usually combined. An installation control is usually displayed below an icon that is of an app that can be installed and that is displayed by the application market to the user. After the user taps the installation control, download and installation operations can be completed. Certainly, the user may alternatively search for an installation file of the app by using a browser to install the app.

After the installation file of the app is downloaded, a distributed installation service module of the electronic device parses the installation file of the app. The installation file of the app carries first indication information, and the first indication information indicates whether the app supports the distributed function. For example, the first indication information may be carried in the foregoing resource file, and the distributed installation service module reads the first indication information from the resource file. If the first indication information indicates that the app does not support the distributed function, parsing and installation are performed assuming that the app is a single-device app. If the first indication information indicates that the app supports the distributed function, the distributed installation management module determines to perform distributed installation on the distributed app.

In the following descriptions, a device that downloads the distributed app and performs distributed installation is referred to as a master device, and another device on which some modules of the distributed app are installed is referred to as a subordinate device. A distributed installation management module of the master device is used to install all distributed apps on the master device, and manage, uninstall, and perform data query on the installed distributed apps. If it is determined that the app supports the distributed function, the distributed installation management module determines on which devices (subordinate devices) the distributed app can be installed.

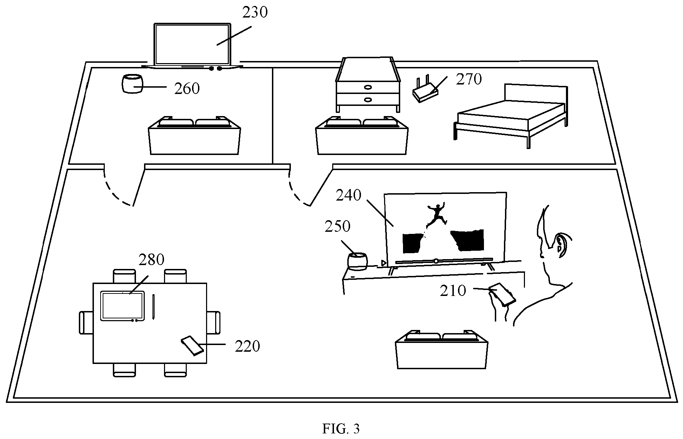

The distributed installation management module may determine, based on information of a device connected to a current network, a subordinate device on which the distributed app can be installed, to form an installation network of the distributed app. Devices in the installation network need to be connected to a same wireless network. Therefore, the distributed management service first detects a device located in a same wireless network with the master device. FIG. 3 is a schematic diagram of an installation network corresponding to a distributed app in a smart home scenario. As shown in FIG. 3, a distributed installation management module detects that currently eight devices are connected to a same wireless network, including a mobile phone 210 (master device), a mobile phone 220, a tablet computer 230, a TV 240, a sound box 250, a sound box 260, a router 270, and a notebook computer 280. It may be understood that FIG. 3 is merely an example for description, and more intelligent devices may be further connected to the wireless network. For example, a wireless charger, a smart desk lamp, an air conditioner, and the like may be further connected to the wireless network.

In the scenario shown in FIG. 3, the mobile phone 210 serves as the master device, and determines, from the remaining seven devices other than the master device, a device that can be used as a subordinate device. The distributed installation management module in the mobile phone 210 may determine, based on an OS type and a memory size of a device, whether the device can be used as a subordinate device.

For any device, a distributed management service determines whether an OS type of the device is the same as an OS type of the master device. If the OS type of the device is different from the OS type of the master device, the distributed management service determines that the device cannot be used as a subordinate device; or if the OS type of the device is the same as the OS type of the master device, determines whether memory of the device is greater than a preset memory threshold. If the memory of the device is greater than the memory threshold, the distributed management service determines that the device is a subordinate device; or if the memory of the device is less than the memory threshold, determines that the device cannot be used as a subordinate device. Device types of the master device and the subordinate device may be the same or different. This is not limited in this embodiment. For example, when the master device is a mobile phone, the subordinate device may also be a mobile phone, or may be a tablet, a TV, a sound box, or a router.

The subordinate device determined in the foregoing manner meets the following conditions: The subordinate device and the master device are located in a same network, the subordinate device and the master device have a same OS type, and memory of the subordinate device is greater than a preset memory threshold. The OS type may be an ^{®}iOS type, an ^{®}Android (Android) system, a ^{®}HarmonyOS, or the like. For example, the distributed installation management module determines, from the mobile phone 220, the tablet computer 230, the TV 240, the sound box 250, the sound box 260, the router 270, and the notebook computer 280, that the tablet computer 230, the TV 240, the sound box 250, and the router 270 may be used as subordinate devices. The mobile phone 210, the tablet computer 230, the TV 240, the sound box 250, and the router 270 jointly form an installation network of the distributed app, and all devices in the installation network have a same OS type, for example, the mobile phone 210, the tablet computer 230, the TV 240, the sound box 250, and the router 270 all use an Android system or a HarmonyOS.

Optionally, the distributed installation management module may alternatively determine, based on the OS type and a processor parameter, whether a device can be used as a subordinate device, or determine, based on an OS type, a memory size, and a processor parameter, whether a device can be used as a subordinate device. This is not limited in this embodiment.

In an implementation, after determining, based on the first indication information, to perform distributed installation on the distributed app, the master device may determine, according to the foregoing process, a subordinate device on which the distributed app is installed. After determining the subordinate device on which the distributed app is installed and function modules installed on the subordinate devices, the master device may directly perform distributed installation. That is, the distributed installation management module sends installation files of the function modules that need to be installed on the subordinate devices to the subordinate devices, and the subordinate devices complete installation based on the received installation files.

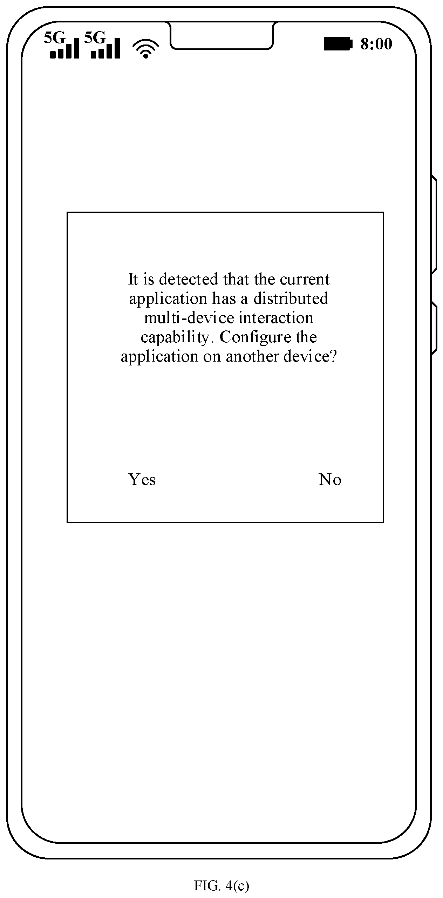

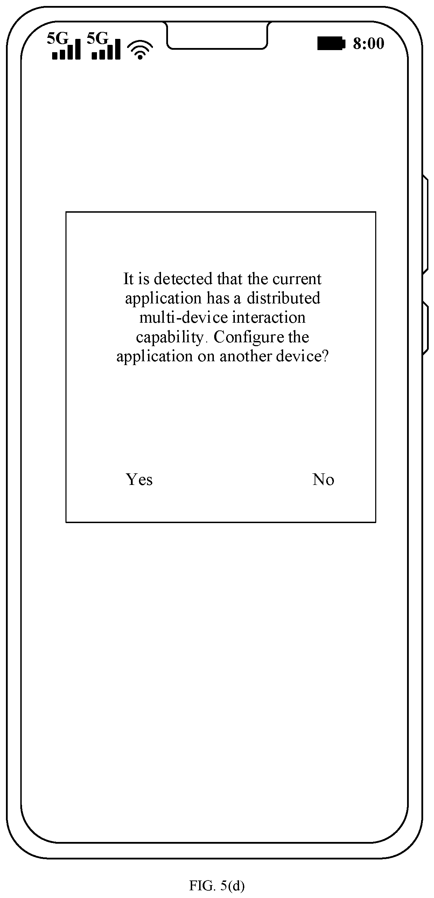

In another implementation, after determining, based on the first indication information, to perform distributed installation on the distributed app, the master device displays a second interface shown in FIG. 4(c) or FIG. 5(d), where the second interface includes a distributed installation option.

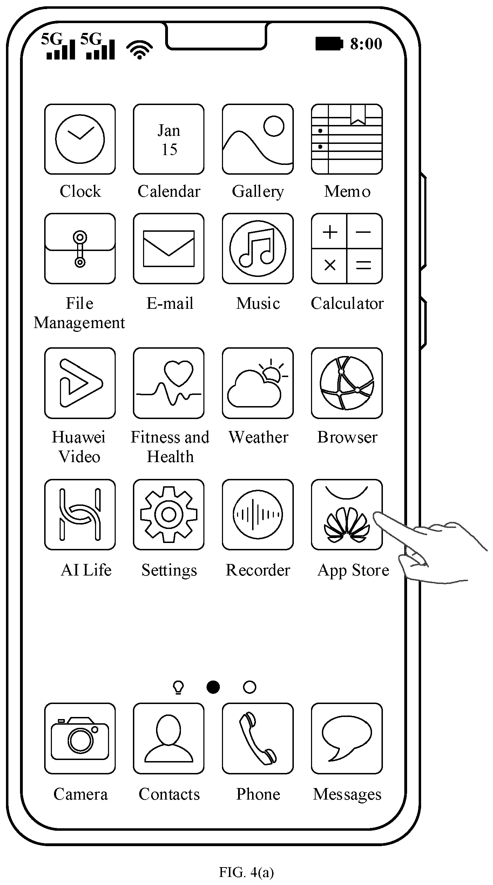

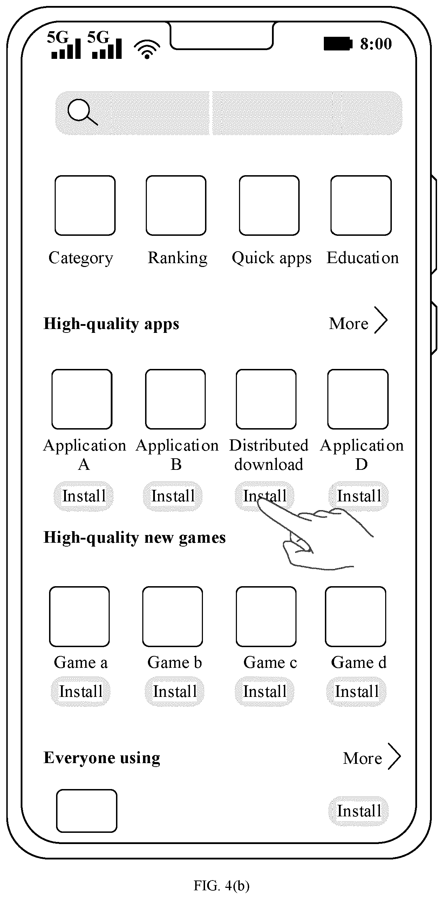

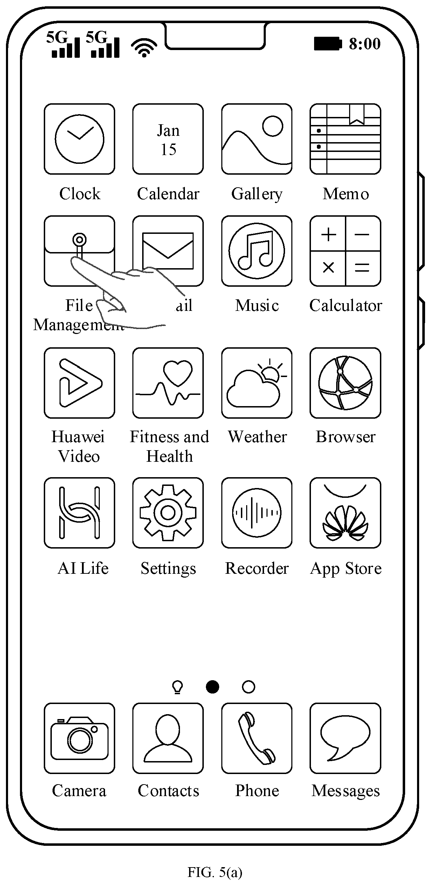

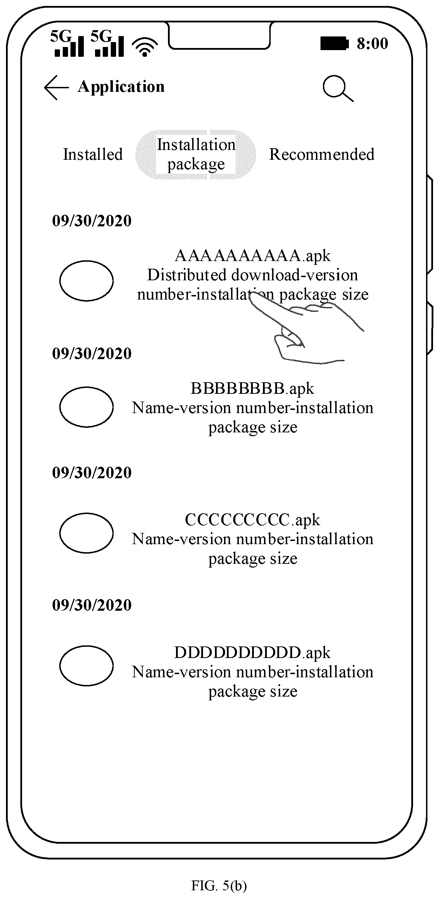

Refer to FIG. 4(a), FIG. 4(b), and FIG. 4(c). A user installs a distributed download app by using "Application Store", and the user opens an interface shown in FIG. 4(b) by using "Application Store". An icon of the distributed download app is displayed in high-quality applications. After the user taps an installation control in FIG. 4(b), the second interface shown in FIG. 4(c) may be jumped to from a current page. It may be understood that the icon of the distributed download app may not be displayed in the interface shown in FIG. 4(b), and the user finds the distributed download app by using a search function in the interface shown in FIG. 4(b), and then installs the distributed download app. Refer to FIG. 5(a) to FIG. 5(d). The user installs the distributed download app by using "File Management", and the user opens an interface shown in FIG. 5(b) by using "File Management". It may be understood that one or more interfaces exist between an interface in FIG. 5(a) and the interface in FIG. 5(b), and specific operations in the interface in FIG. 5(a) to the interface in FIG. 5(b) may be different on different terminal devices. In the interface shown in FIG. 5(b), an installation package option includes installation packages of a plurality of applications that are downloaded but not installed. The installation package of the application may be an ^{®}Android application package (Android application package, APK), an application package of a ^{®}HarmonyOS, or the like.

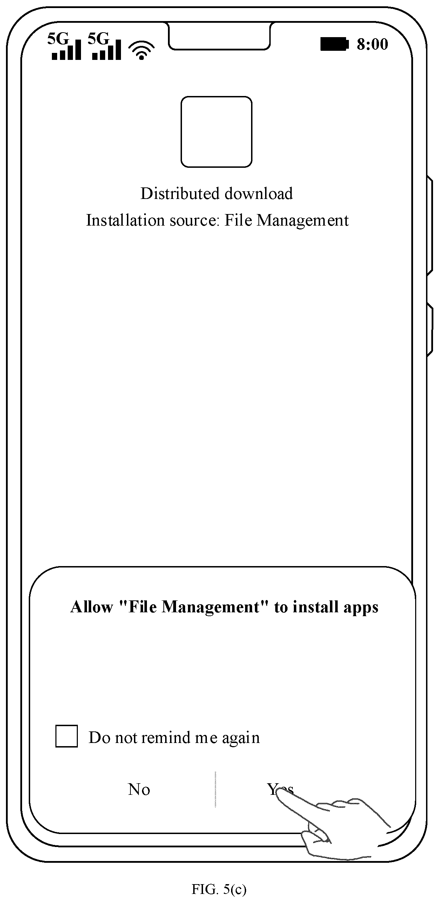

The application packages that are not installed may be arranged in the interface according to a download time sequence. In the figure, an icon of an application and a name of an installation package, for example, AAAAAAAA.apk, are further displayed, and a name (for example, distributed download), a version number, and a size of the installation package of the application are further displayed. The user may trigger an installation operation by tapping the name or the icon of the installation package. After the user triggers the installation operation, an interface shown in FIG. 5(c) is jumped to. If "File Management" is allowed to install the application, an interface shown in FIG. 5(d) is jumped to.

Optionally, in a possible implementation, after the user taps the name or the icon of the installation package shown in FIG. 5(b), the interface shown in FIG. 5(d) may be directly jumped to.

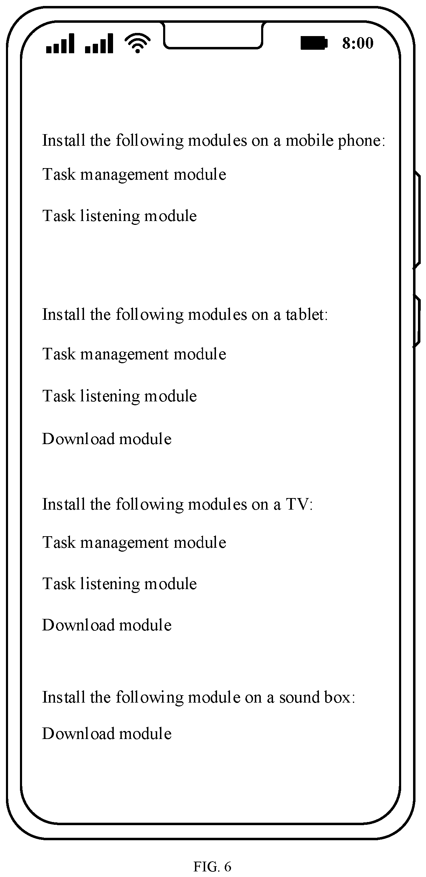

Refer to the interface shown in FIG. 4(c) or FIG. 5(d). The distributed installation option is displayed in the second interface for the user to determine whether to perform distributed installation. The distributed installation option is, for example, "It is detected that the current application has a distributed multi-device interaction capability. Configure the application on another device?", and two selection controls "Yes" and "No" are displayed. If the user selects "Yes", an interface shown in FIG. 6 is popped up. If the user selects "No", parsing and installation are performed assuming that the application is a single-device app. The single-device app is an app whose function modules are all installed on a same device. For details about how to install a single-device app, refer to an installation process of an existing app.

The function module installed on each device is determined by the distributed installation management module based on the function modules divided by the distributed app and a type of each device in the installation network. For example, the task management module needs to be installed on the master device. The user may determine whether to install the task management module on another device. For another example, usually, a mobile phone, a tablet, and a TV have a screen, and a management interface is displayed by using the screen, so that the user can manage the distributed app. Therefore, the task management module may be installed on a device having a screen. For example, the task management module may be deployed on the mobile phone, the tablet, and the TV. The TV is usually installed at a fixed location, which is inconvenient for interaction with the user. Therefore, the task management module may be deployed on the mobile phone and the tablet.

The task listening module is mainly used to listen to a user operation, and is usually bound to a function of the task management module. For example, the task listening module is also deployed on the mobile phone and the tablet. The task processing module provided by the distributed app may be deployed on some devices that are not commonly used by the user or some devices with relatively low load, to prevent the task processing module from occupying many computing and storage resources when processing a task and greatly affecting performance of the master device. For example, when the task processing module is a download module, the download module is deployed on the sound box and the router, to prevent the download function from occupying a large bandwidth of the mobile phone and affecting use of the mobile phone by the user.

As shown in FIG. 6, the mobile phone provides a task management function and a task listening function, the tablet and the TV both provide the task management function, the task listening function, and a download module function, and the sound box provides a download module. It may be understood that, when there are a plurality of devices in the installation network, one page of a display screen may not be able to display function modules provided by all of the devices, and therefore, multi-screen display is required. In this case, the user may perform a page flipping operation through an operation such as sliding, to browse the function modules provided by all of the devices.

In an optional manner, a function module installed on each device is determined by the master device, and cannot be adjusted by the user. An installation and configuration interface shown in FIG. 6 is only for the user to understand the function modules installed on the devices.

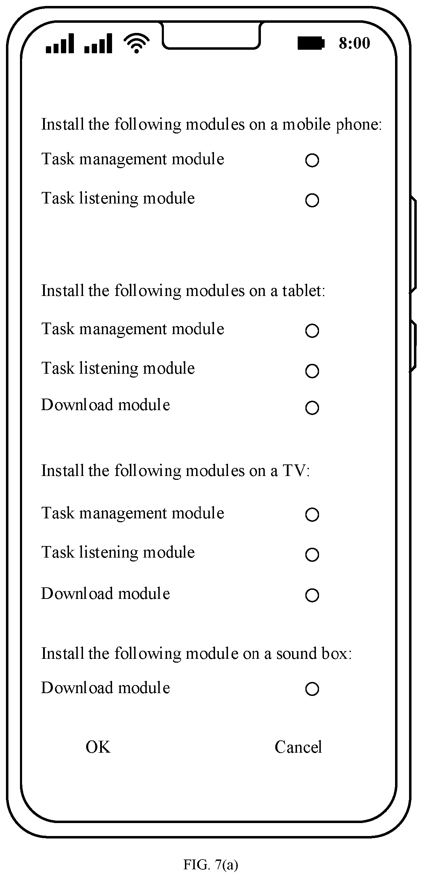

In another optional manner, a function module installed on each device may be adjusted by the user, and the user may select a function module that needs to be installed on each device. In this scenario, in an implementation, if the user performs a touch and hold operation in a blank area of an interface shown in FIG. 6, a third interface shown in FIG. 7(a) is displayed, and the third interface includes a candidate device on which the distributed app can be installed and an option of a function module that can be installed on each candidate device. That is, after the user touches and holds the blank area of the interface shown in FIG. 6, a selection control is added for each function module on the basis of the interface shown in FIG. 6. In another implementation, after the user selects the "Yes" control in the second interface shown in FIG. 4(c) or FIG. 5(d), the third interface shown in FIG. 7(a) is directly jumped to.

In response to a second selection operation performed by the user on a function module that can be installed on the candidate device, a subordinate device on which the distributed app is installed and the function module installed on the subordinate device are determined.

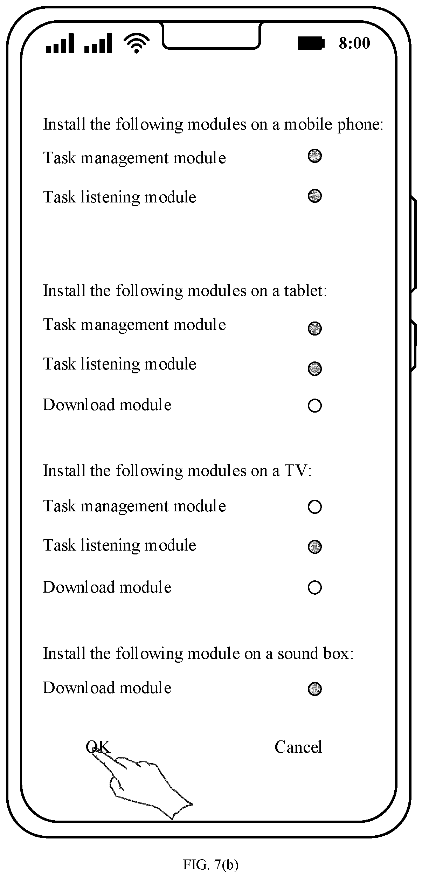

The selection control may be a circular control shown in FIG. 7(a) and FIG. 7(b). The selection control is not selected by default after being displayed in the third interface. If the user needs to install a function on a device, the user selects a corresponding control. After the control is selected, the control turns bright or a color of the control changes, so that the control can be distinguished from an unselected control. For example, the selection control is white when not selected, and turns blue or gray after being selected by the user, as shown in FIG. 7(b). This embodiment does not limit a form of the selection control, and the selection control may alternatively be a control in another form.

In the interface shown in FIG. 7(a) and FIG. 7(b), the mobile phone provides the task management module and the task listening module. The user may choose to install the two function modules on the mobile phone. Both the tablet and the TV provide the task management module, the task listening module, and the download module. The user may choose to install the task management module and the task listening module on the tablet, and install the task listening module on the TV. Both the sound box and the router (not shown) provide the download module, and the user may choose to install the download module only on the sound box, or install the download module only on the router. Table 1 is a schematic diagram of function modules installed on the devices in the distributed network that are finally selected by the user.

**Table 1**

| Device | Installed function module |
|---|---|
| Mobile phone (master device) | Task management module and task listening module |
| Tablet | Task management module and task listening module |
| TV | Task listening module |
| Sound box | Download module |
| Router | Download module |

After selecting the function module to be installed, the user taps an "OK" control at the bottom of the page to complete configuration. If the user taps a "Cancel" control, the configuration is canceled, and the user needs to reselect the function module of each device.

In the interface shown in FIG. 7(a) and FIG. 7(b), the user may select the subordinate device on which the distributed app is installed and the function module installed on each subordinate device at the same time. For example, not selecting any function module of the TV means that the user does not select the TV as the subordinate device, and selecting a function module of a device means that the user selects the device as the subordinate device.

Optionally, in a possible implementation, after the user confirms to perform distributed installation, a fourth interface is displayed, where the fourth interface includes an option of a candidate device on which the distributed app can be installed. In response to a third selection operation performed by the user on the candidate device, a subordinate device on which the distributed app can be installed is determined, and a fifth interface is displayed, where the fifth interface displays an option of a function module that can be installed on the subordinate device. In response to a fourth selection operation performed by the user on the function module that can be installed on the subordinate device, the function module installed on the subordinate device is determined. In this manner, the user needs to select a subordinate device first, and then selects a function module installed on the subordinate device.

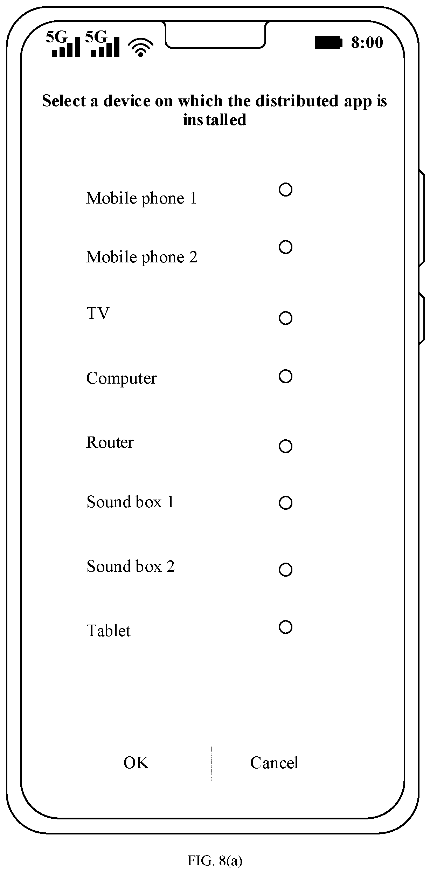

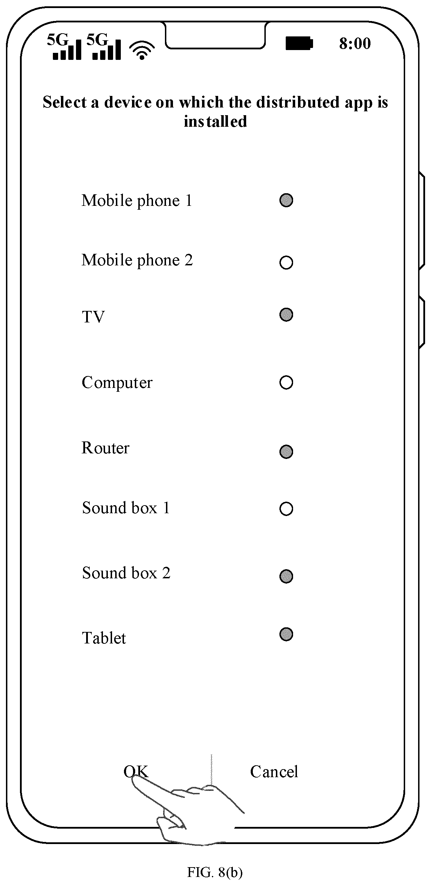

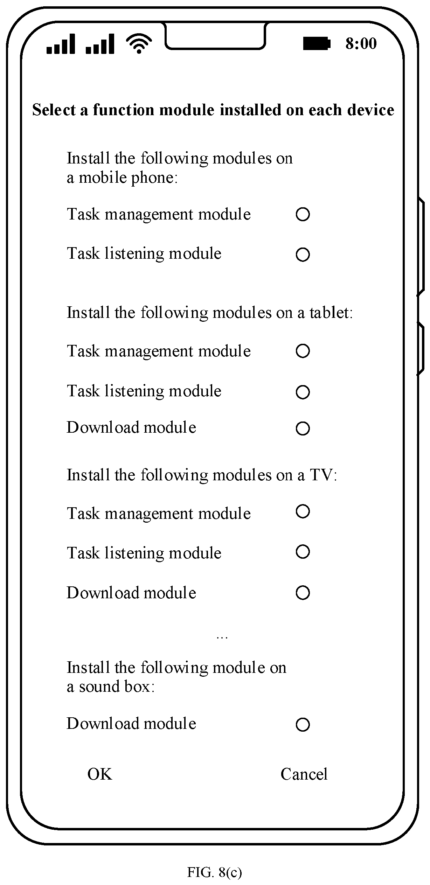

For example, after the user selects the "Yes" control in the interface shown in FIG. 4(c) or FIG. 5(d), the fourth interface shown in FIG. 8(a) is directly jumped to. The fourth interface includes eight candidate devices. The user selects, from the eight devices, five devices shown in FIG. 8(b): a mobile phone 1, a TV, a tablet, a router, and a sound box 2, where the mobile phone 1 is a master device (that is, a device that displays the fourth interface). Optionally, the master device may not be displayed, and only candidate devices that can be used as subordinate devices are displayed for the user to select. After the user taps the "OK" control shown in FIG. 8(b), a fifth interface shown in FIG. 8(c) or the interface shown in FIG. 7(a) is directly jumped to, and the user may further select a function installed on each device.

Optionally, in an implementation, the user cannot select a function module installed on the master device, and the user can select only a function module installed on the subordinate device.

After the user confirms the functions installed on the subordinate devices, the master device sends, based on the function modules to be installed on the subordinate devices, installation files (or referred to as installation packages) corresponding to the function modules installed on the subordinate devices to the corresponding subordinate devices. For example, the mobile phone sends an installation file corresponding to the task management module to the tablet, sends an installation file corresponding to the task listening module to the tablet and the TV, and sends an installation file corresponding to the download module to the sound box and the router. After receiving the installation file, each subordinate device parses the installation file and installs the corresponding function module.

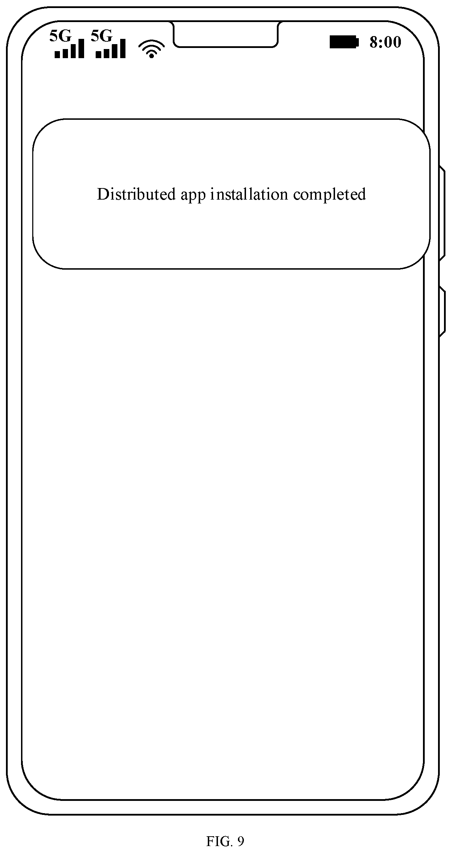

It may be understood that the installation files sent by the master device to two subordinate devices on which a same function module is installed are the same. However, due to differences between hardware (for example, screen sizes) of the two subordinate devices and operating systems carried on the two subordinate devices, interfaces of the same function module that are displayed to the user on the two subordinate devices may be different, but a same function is performed. For example, the installation files corresponding to the task monitoring module sent by the mobile phone to the tablet and the TV are the same. However, because hardware and operating systems of the tablet and the TV are different, interfaces of the task monitoring module that are finally displayed to the user on the TV and the tablet are different, but a same listening function of the task monitoring module is performed in the TV and the tablet. Optionally, after each subordinate device completes installation, the subordinate device returns an installation completion response message to the master device. After receiving installation completion response messages returned by all subordinate devices, the master device confirms that installation of the distributed app is completed, and may pop up an interface shown in FIG. 9, to prompt the user that installation of the distributed app is completed. After installation of the distributed app is completed, all devices in the installation network start to work to implement the functions of the distributed app.

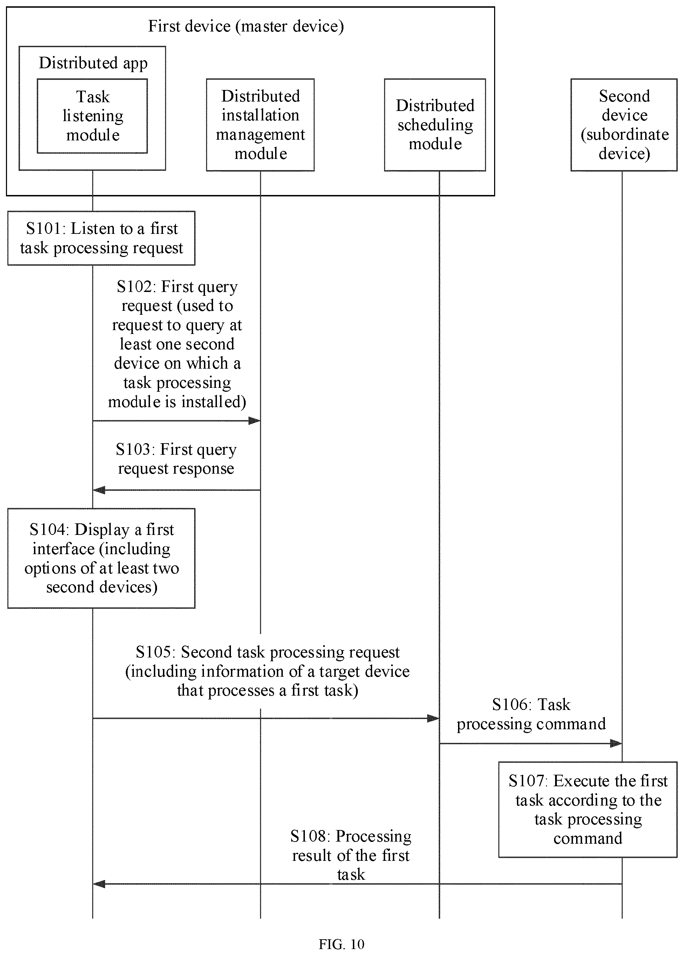

FIG. 10 is a flowchart of executing a task by a distributed app. As shown in FIG. 10, a first device (that is, a master device) includes a task listening module, a distributed installation management module, and a distributed scheduling module. The task listening module belongs to a function module of the distributed app, and the distributed installation management module and the distributed scheduling module belong to system services of the master device. As shown in FIG. 10, the process includes the following steps.

S101: The task listening module listens to a first task processing request.

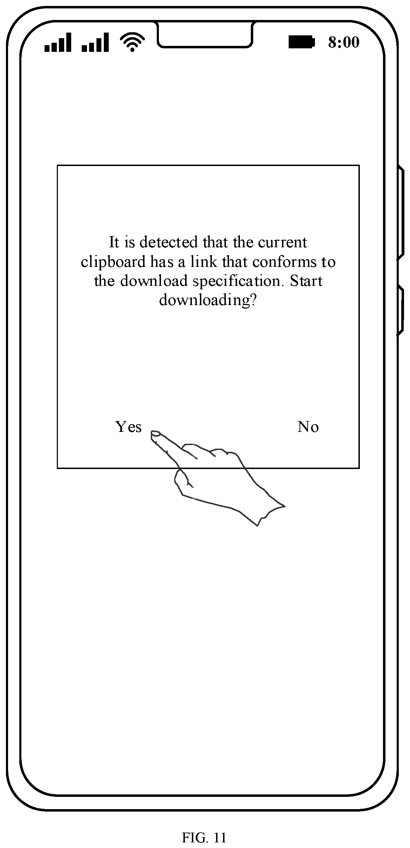

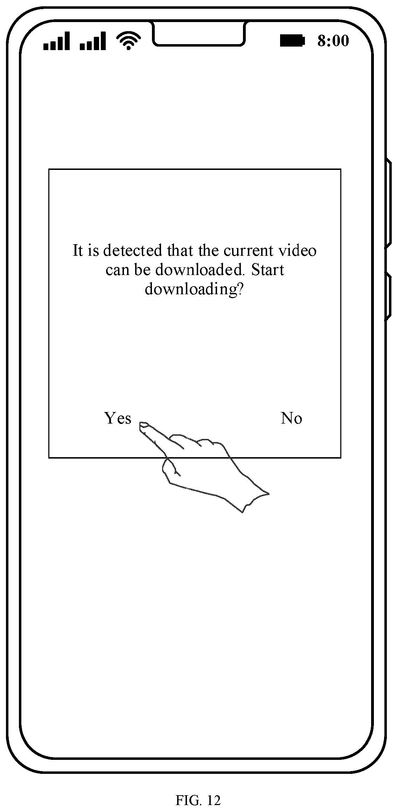

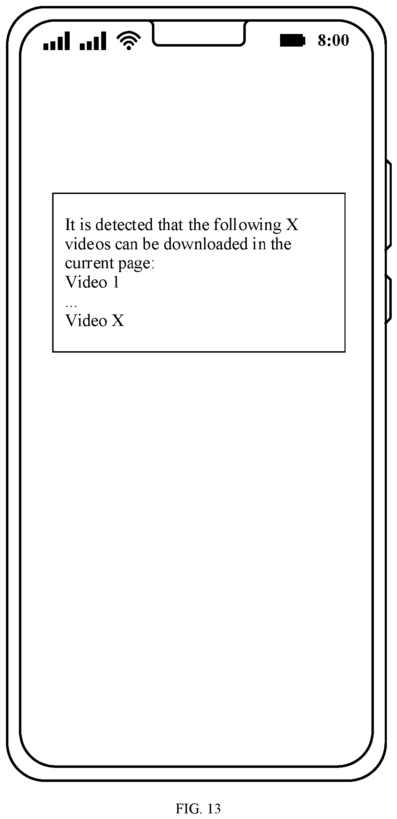

The task listening module is configured to provide an interaction interface for a user, to complete interaction between the device and the user. The user inputs a first task processing request by using the interaction interface, where the first task processing request is used to request to process a first task. The foregoing distributed download app is still used as an example for description. The first task is a download task, and the user may trigger task download in the following several manners.
(1) When the user uses a tablet to browse a web page by using a browser, the user needs to download a video. In this case, the user copies a link of the video, and a listening module of the tablet detects, through listening, the copying operation performed by the user. Then a download selection page shown in FIG. 11 may be popped up. Prompt information and a selection control are displayed in the page, where the prompt information is used to prompt the user whether to perform downloading by using the link, and the prompt information is, for example, "It is detected that the current clipboard has a link that conforms to the download specification. Start downloading?". The selection control may be "Yes" and "No". The user can tap "Yes" to perform downloading or tap "No" to cancel downloading.
(2) The task listening module listens to an operation performed by the user on a video in a web page. The web page includes one or more videos, where some videos can be downloaded, and some videos cannot be downloaded. When a tap operation performed by the user on a video is detected through listening, if the video can be downloaded, a download selection page shown in FIG. 12 is popped up, where the selection page is used to prompt the user that the video can be downloaded, and the prompt information is, for example, "It is detected that the current video can be downloaded. Start downloading?"
(3) After the user opens a web page, the task listening module determines whether there is a video that can be downloaded in the web page. If there is a video that can be downloaded, prompt information shown in FIG. 13 is popped up, where the prompt information is used to prompt the user of a quantity of videos that can be downloaded in the page and information of the video, for reference by the user. For example, the prompt information is "It is detected that the following X videos can be downloaded in the current page", and information such as a name and a type of each video may be further displayed in the page. This is not limited in this embodiment. The user can learn which videos can be downloaded based on the prompt information, open a link of the video in the web page, and copy the link of the video to the download app to download the video.

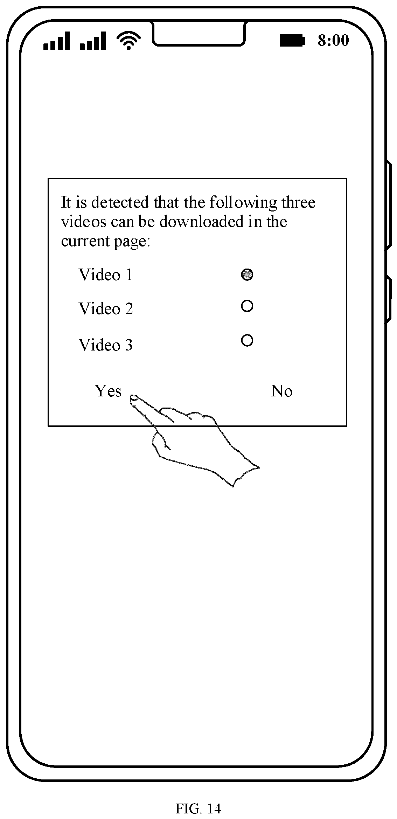

Optionally, after the task listening module detects, through listening, that there is a video that can be downloaded in the web page, a download selection page shown in FIG. 14 may be further popped up. In addition to the prompt information shown in FIG. 13, a selection control is further displayed after each piece of video information in the download selection page. The user may select one or more videos by using the selection control, and after selecting the video, the user taps "Yes" in the page to confirm downloading, or the user selects "No" to cancel downloading. In the foregoing manners (1) and (2), the download selection page is popped up by triggering of the user. In manner (3), triggering by the user is not needed, and the device where the task listening module is located automatically pops up the download selection page.

After the user performs selection to download a video in the web page, in an example manner, the user needs to manually copy a link (which may also be referred to as an address or a website) of the video and paste the link to a download page of the download app. The user first finds an address of the to-be-downloaded video in a page that displays a download resource, copies the address of the to-be-downloaded video, starts the download app, and pastes the address of the to-be-downloaded video to the download page.

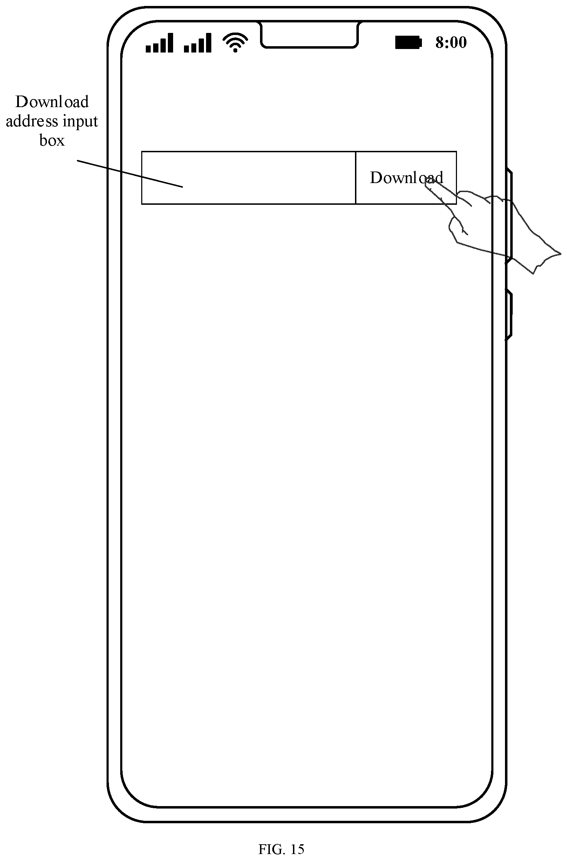

For example, the download page is shown in FIG. 15. The download page includes a download address input box. The link of the video is pasted into the download address input box. A "Download" control is further disposed in a right side of the download input box. After the user taps the "download" control, the download app starts to download the video. Certainly, a location and a form of the "Download" control are not limited to those shown in FIG. 15, and the "Download" control may alternatively be set below the download address input box. Optionally, prompt information is further displayed in the download input box, prompting the user to enter the download address.

In another example manner, after the user performs selection to download a video in the web page, the listening module automatically copies and pastes a link of the video to the download page of the download app. For the download page, refer to FIG. 15. In this manner, the user does not need to manually copy the link from the web page and paste the link to the download app.

After the user taps the "Download" control in the download page of the distributed app, task download is triggered. The task listening module receives a task download request.

S102: The task listening module sends a first query request to the distributed installation management module in response to the first task processing request, where the first query request is used to request at least one second device on which the task processing module is installed.

S103: The distributed installation management module sends a first query request response to the task listening module, where the first query request response includes information of the at least one second device on which the task processing module is installed.

In response to the first task processing request, the task listening module queries the distributed installation management module for the at least one second device on which the task processing module is installed. In this embodiment, the task listening module obtains, through steps S102 and S103, the information of the at least one second device on which the task processing module is installed. It may be understood that in a possible implementation, the task listening module may further request, by performing more steps, the information of the at least one second device on which the task processing module is installed. This is not limited in this embodiment.

S104: The task listening module displays a first interface, where the first interface includes options of at least two second devices.

Step S104 is an optional step. In other words, after the task listening module receives the at least one second device on which the task processing module is installed, a second device may be randomly selected or selected according to a preset rule to process the first task, and the second device does not need to be displayed to the user for the user to select.

For example, when determining that a task processing service is installed on a plurality of devices, the task listening module automatically selects one device from the plurality of devices to process the first task. The task listening module may randomly select one device from the plurality of devices to process the first task, or may select, based on load conditions of the plurality of devices, a device with a light load to process the first task, or may select, based on a size of a processing resource required by the first task and performance of the plurality of devices, a device with matched performance to process the first task. This is not limited in this embodiment.

In this embodiment, when the task listening module finds that the task processing module is installed on the at least two second devices, the task listening module displays the first interface, where the first interface includes the options of the at least two second devices. The user selects one device from the at least two second devices to process the first task. In response to a first selection operation performed by the user on the options of the at least two second devices, a target device that processes the first task is determined, where the first selection operation is used to select the target device.

The task listening module may display, in a list manner, second electronic devices having a task processing function to the user, where a processing device list includes a plurality of devices, and the user may select one target device from the plurality of devices to process the first task.

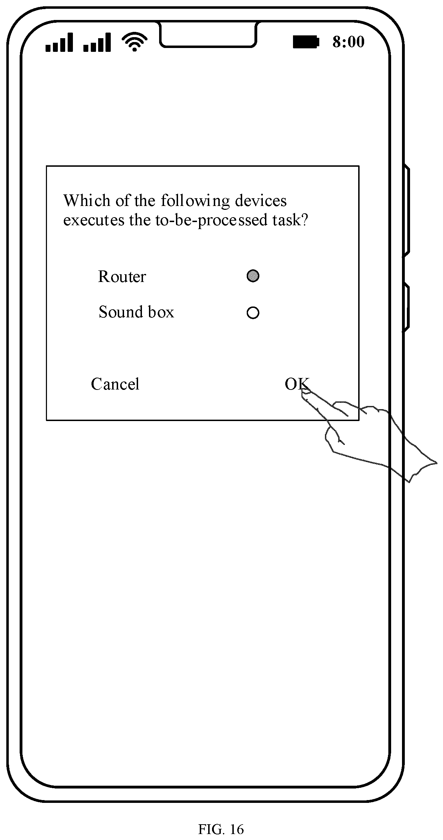

For example, the task listening module obtains that the task processing module is installed on two second devices, and an interaction interface shown in FIG. 16 is popped up. The interaction interface displays two second devices: a router and a sound box. The user may select the router to process the first task. After selecting the router, the user may tap an "OK" button, and the router starts to process the first task. After the task listening module finds that the task processing module is installed on only one second device, the interaction interface shown in FIG. 16 may not be popped up, and the device is used by default for processing.

According to the method steps in steps S102 to S104, the first device determines, based on the first task processing request, the target device that processes the first task from the at least one subordinate device. It may be understood that the foregoing is merely an example for description.

S105: The task listening module sends a second task processing request to the distributed scheduling module, where the second task processing request includes information of the target device that processes the first task.

After determining the target device that processes the first task, the first device sends a task processing command to the target device. Specifically, the first device may send the task processing command to the target device by using the task listening module and the distributed scheduling module. The target device is any one of the at least one second device, and the target device may be selected by the user from a plurality of second devices, or may be selected by the task listening module from a plurality of second devices.

S106: The distributed scheduling module sends the task processing command to the target device.

The distributed scheduling module sends the task processing command to the target device in response to the second task processing request, where the processing command is used to indicate the target device to execute the first task. After receiving the second task processing request, the distributed scheduling module learns, from the second task processing request, that the target device executes the first task, and sends the task processing command to the target device.

S107: The target device executes the first task according to the task processing command.

After the task processing module in the target device receives the task processing command, the task processing module processes the first task according to the task processing command.

S108: The target device returns a processing result of the first task to the task listening module.

The target device processes the first task to obtain the processing result, and returns the processing result to the task listening module. Optionally, the task listening module displays the processing result of the first task to the user.

A case in which the first task is a download task is used as an example. The second processing request includes an address of the download task. The distributed scheduling module sends a download command including the address of the download task to the target device. The target device performs download based on the address of the download task in the download command, and sends a video or another file that is downloaded to the task listening module. The task listening module displays the video or another file that is downloaded to the user.

According to the distributed application processing method provided in this application, a distributed app is installed on a plurality of electronic devices, and the plurality of electronic devices jointly complete a function of the distributed app. A first device on which the distributed app is downloaded and installed can listen to a task processing request, and find, based on the task processing request, a second device on which a task processing module of the distributed app is installed, and then request the second device to process a task. After processing the task, the second device returns a task processing result to the first device, so that distributed task processing can be implemented. According to the method, a distributed function is implemented by using a distributed app, thereby improving portability of the distributed function. Any electronic device on which a distributed OS is installed can install the distributed app, to obtain the distributed function provided by the distributed app, thereby reducing development difficulty and costs of a distributed service.

In this embodiment, an example in which a task listening module of a master device (that is, the first device) listens to a task and triggers task execution is used for description. It may be understood that the foregoing procedure in this embodiment is also applicable to a task listening module of a subordinate device. The task listening module of the master device and the task listening module of the subordinate device have a same function, and the two task listening modules have no difference in task listening and triggering procedures. The task listening module of the master device and the task listening module of the subordinate device both need to communicate with a distributed installation management module or a distributed scheduling module of the master device through a distributed soft bus. The distributed installation management module and the distributed scheduling module do not need to distinguish whether the task listening module belongs to the master device or the subordinate device.

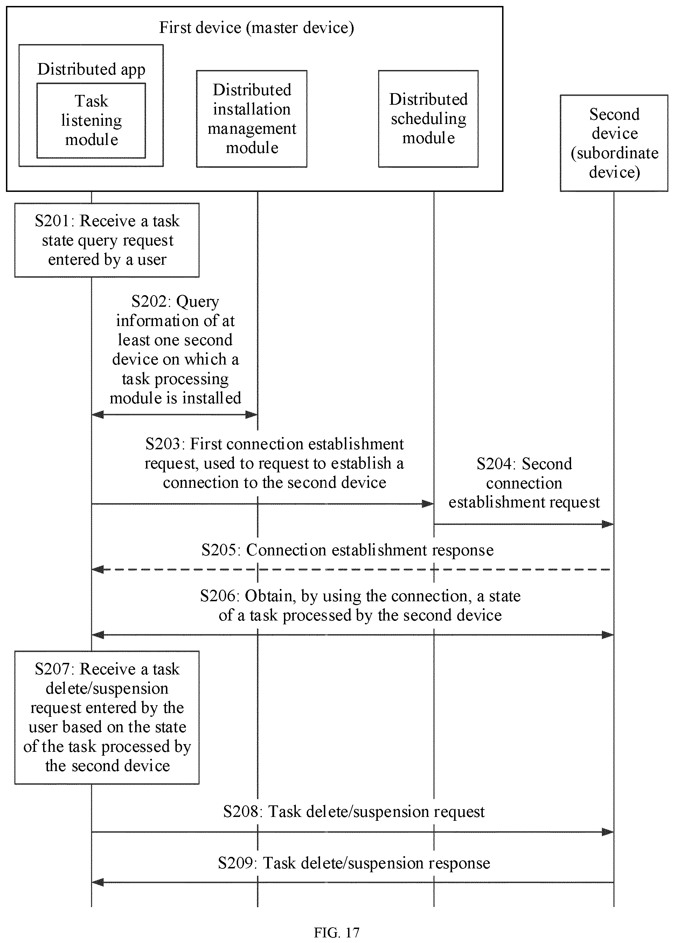

FIG. 17 is a schematic flowchart of querying a task state in the distributed app. In this embodiment, an example in which the task management module of the master device (that is, the first device) queries a task state is used for description. As shown in FIG. 17, the query procedure includes the following steps.

S201: The task management module receives a task state query request entered by the user.

The task state query request is used to request to query a state of a task currently processed in the distributed app, that is, query a state of a task on each second electronic device on which the task processing module is installed.

In this embodiment, the user may trigger the task management module to initiate task state query. For example, a mobile phone is the master device, and the user enters a query function page by using a distributed app on the mobile phone, and initiates task state query by using the query function page. The first device determines, based on the task state query request, the second device having the task processing function from the at least one subordinate device. For example, the second device having the task processing function is determined by using the method shown in the following step S202.

S202: In response to the task state query request, the task management module queries the distributed installation management module for information of the at least one second device on which the task processing module is installed. The task management module may query, by performing steps S102 and S103 in the embodiment shown in FIG. 10, the information of the at least one second device on which the task processing module is installed. Certainly, the task management module may also query the information of the second device in a manner different from that is used by the task listening module in the embodiment shown in FIG. 10. This is not limited in this embodiment.

S203: The task management module sends a first connection establishment request to the distributed scheduling module, where the first connection establishment request is used to request to establish a connection to the second device.

When the task processing module is installed on a plurality of second devices, in an implementation, the task management module displays an interaction interface to the user, where the plurality of second devices are displayed in the interaction interface, and the user may choose to query a state of a task on one or more second devices. The task management module sends, based on a choice of the user, the first connection establishment request to the distributed scheduling module, where the first connection establishment request includes information of a second device to which a connection needs to be established. The distributed scheduling module establishes, based on the first connection establishment request, a connection only to the second device included in the first connection establishment request. In another implementation, the task management module does not display the user interaction interface, and queries, by default, task states of all second devices on which the task processing module is installed. The first connection establishment request may include information of the second device, or may not include information of the second device. After receiving the first connection establishment request, the distributed scheduling module finds that the first connection establishment request does not include the information of the second device, and sends the connection establishment request to all of the second devices by default.

S204: The distributed scheduling module sends a second connection establishment request to the second device. The second connection establishment request is used to request to establish a request to the second device.

S205: The second device returns a connection establishment response to the task management module.

Step S205 is an optional step. After sending the first connection establishment request to the distributed scheduling module, the task management module considers by default that a connection to the second device is established after preset duration. In S205, the second device directly returns the connection establishment response to the task management module. It may be understood that in an actual case, the second device may first return a second connection establishment response to the distributed scheduling module, and then the distributed scheduling module returns a first connection establishment response to the task management module.

S206: The task management module obtains, by using the connection, a state of a task processed by the second device. The task management module obtains, by using the connection established with the second device, the state of the task processed by the second device. Specifically, the task management module may interact with the second device by using one or more pieces of information, to obtain the state of the task processed by the second device.

After determining the second device having the task processing function from the at least one subordinate device, the first device may request, from the second device by using the method in steps S203 to S206, the state of the task processed by the second device. It may be understood that, this is merely an example for description, and does not constitute a limitation.

S207: The task management module displays the state of the task processed by the second device.

Task state information is, for example, processing completed, being processed, or processing failed. For a task being processed, a processing progress of the task may be further displayed, for example, "The processing progress of the task is 60% completed, and it takes X minutes to complete the task".

S208: The task management module receives a task delete/suspension request entered by the user based on the state of the task processed by the second device.

Steps S208 and S209 are optional steps. After seeing the state of the task processed by the second device, the user may alternatively not perform any operation, and correspondingly, steps S208 and S209 are not performed.

The user may choose to delete a task that fails to be processed, and suspend or delete a task that is being processed. S209: The task management module sends the task delete/suspension request to the second device by using the connection.

The second device deletes a corresponding task based on the task delete request, or stops executing a corresponding task based on the task suspension request. Optionally, the second device may further return a task delete/suspension response to the task management module. The task delete response is used to notify that the task is successfully deleted or fails to be deleted. Similarly, the task suspension request is used to notify that the task is successfully suspended or fails to be suspended. The task management module may display a processing result to the user based on the task delete/suspension response returned by the second device.

In this embodiment, an example in which a task management module of a master device (that is, a first device) queries a task state is used for description. It may be understood that a task management module of a subordinate device may also be used to query the task state. The task management module of the master device has a same function as the task management module of the subordinate device, and the two task management modules have no difference in a query procedure. The task management module of the master device and the task management module of the subordinate device both need to communicate with a distributed installation management module and a distributed scheduling module of the master device through a distributed soft bus. The distributed installation management module and the distributed scheduling module do not need to distinguish whether the task management module belongs to the master device or the subordinate device.

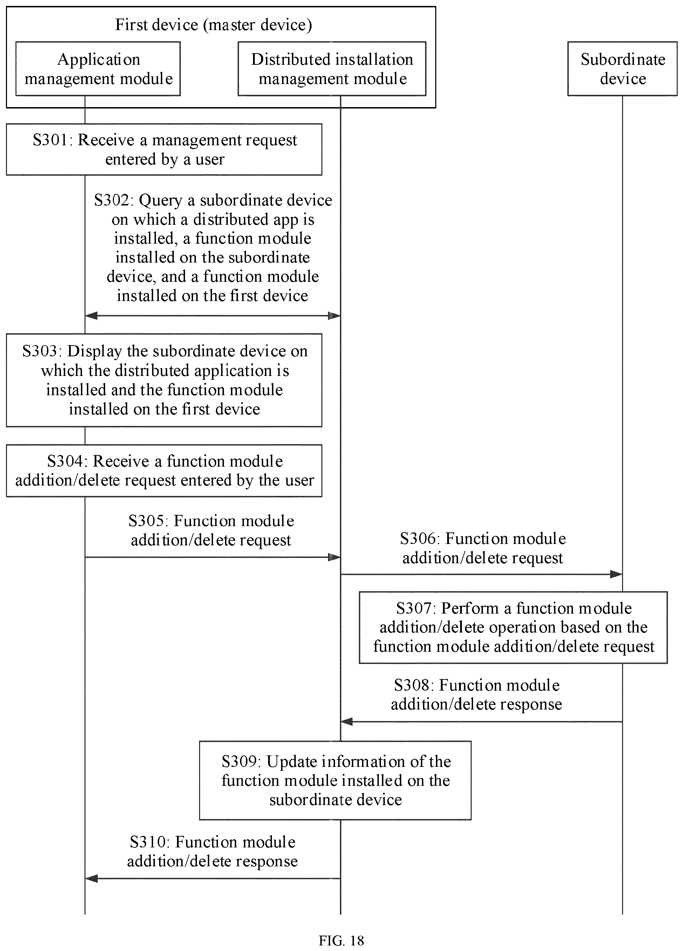

After the distributed app is installed, the application management module of the master device may be used to manage the function modules installed on the subordinate devices. In this embodiment of this application, only the master device has an application management function, and the application management module of the master device may be a system application. FIG. 18 is a flowchart of application management of the distributed app. As shown in FIG. 18, an application management procedure includes the following steps.

S301: The application management module receives a management request entered by the user.

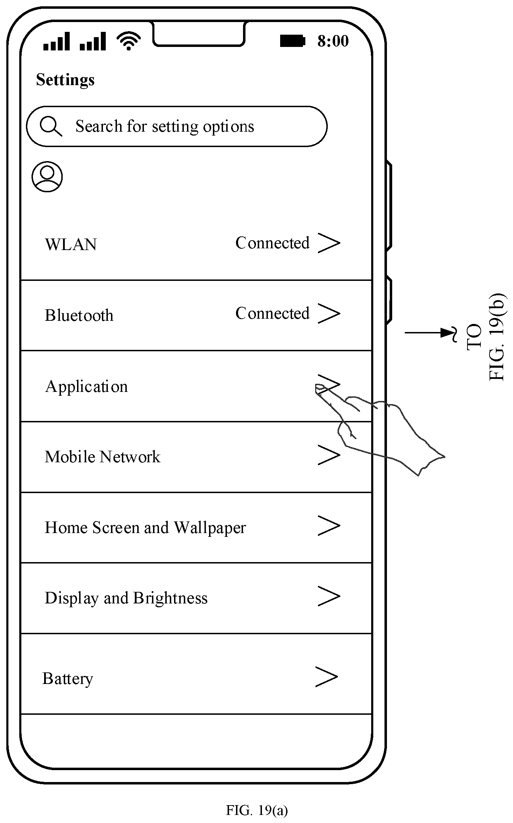

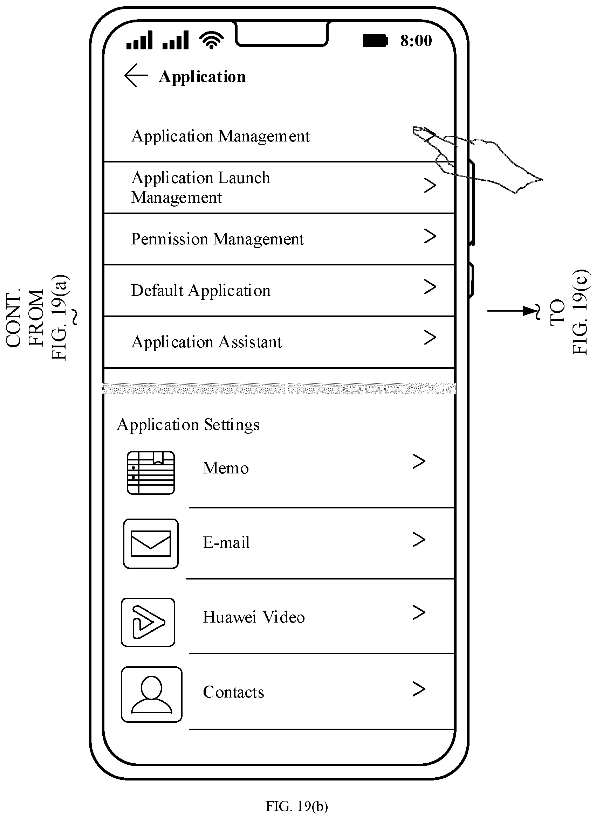

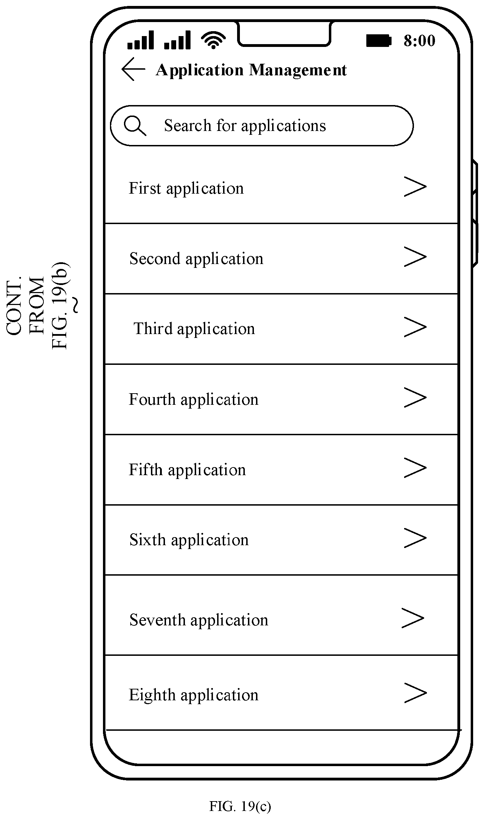

The application management module of the master device may provide a management portal for the user, and the user enters the management request by using the management portal. For example, the master device is a mobile phone. For example, the user opens the management portal according to an operation procedure shown in FIG. 19(a) to FIG. 19(c). As shown in FIG. 19(a) to FIG. 19(c), after the user taps an icon of a "Settings" APP on the mobile phone, a setting page shown in FIG. 19(a) is opened, and some setting options on the mobile phone are displayed in the setting page, including "WLAN", "Bluetooth", "Mobile Network", "Desktop and Wallpaper", "Display and Brightness", "Sound and Vibration", "Application", "Battery", and the like. After the user taps the "Application" option, an application setting page shown in FIG. 19(b) is entered. The application setting page includes setting options such as "Application Management", "Application Launch Management", and "Permission Management". After the user taps the "Application Management" option, an application management page shown in FIG. 19(c) is entered. The application management page includes portals of all applications installed on the device. After the user taps an application, the user performs specific management on the application, for example, permission management, mobile data usage management, and storage management. A distributed management function is added for the distributed app. The user can use the distributed management function to trigger the management request.

S302: In response to the management request, the application management module queries the distributed installation management module for a subordinate device on which the distributed app is installed, a function module installed on the subordinate device, and a function module installed on the first device.

For example, the application management module sends a fourth query request to the distributed installation management module based on the management request, where the fourth query request is used to request to query the device on which the distributed app is installed and the function module installed on the device. The distributed installation management module sends a fourth query response to the application management module, where the fourth query response includes information of the subordinate device on which the distributed app is installed and the function module installed on the subordinate device.

The fourth query request may include an ID of the to-be-queried distributed app. After receiving the fourth query request, the distributed installation management module may query, based on the ID of the distributed app included in the fourth query request, the subordinate device on which the distributed app is installed, and query the function installed on each subordinate device and the function installed on the master device.

S303: The application management module displays the subordinate device on which the distributed application is installed and the function module installed on the first device.

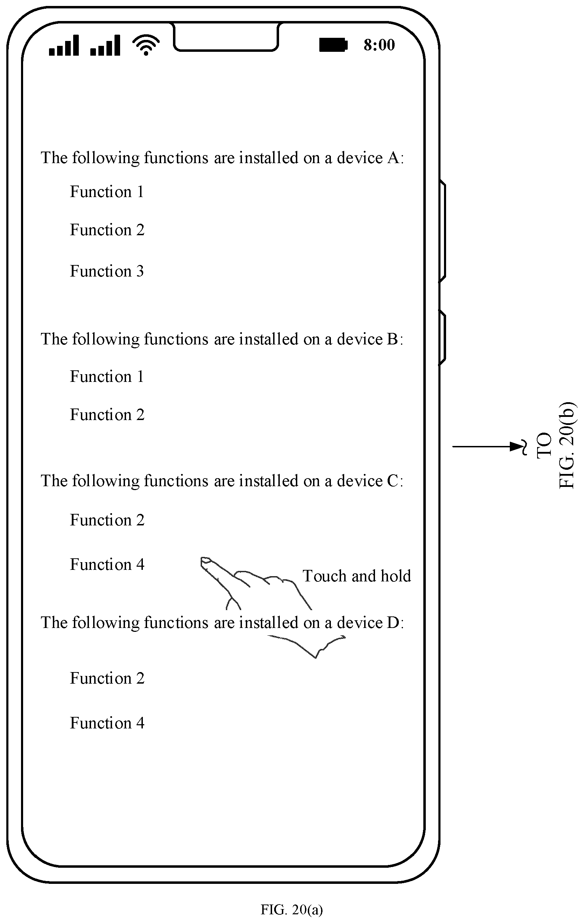

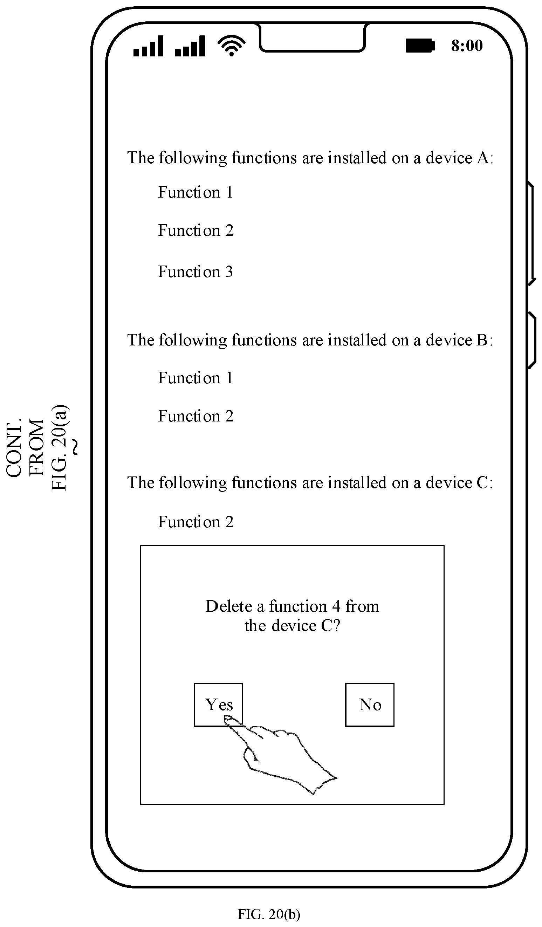

FIG. 20(a) and FIG. 20(b) are a schematic diagram of a management page of the function modules that are of the distributed app and that are installed on the devices. The function modules that are of the distributed app and that are installed on the master device and the subordinate device are displayed in the management page. For example, the task management module and the task listening module of the distributed app are installed on the mobile phone, the task management module and the task listening module of the distributed app are installed on a tablet, and a download module of the distributed app is installed on a router and a sound box.

S304: The application management module receives a function module addition/delete request entered by the user. Step S304 is an optional step. After obtaining through query the function modules that are of the distributed app and that are installed on the devices, the user may not need to adjust the function modules installed on the devices. In this case, the query procedure ends, and step S304 is not performed.

The user may delete a function module installed on each device shown in FIG. 20(a), or add a function module to each device. For example, the user may choose to delete the download module of the router, and choose to add the download module to the tablet computer.

For example, the user may perform a touch and hold operation on an area shown in FIG. 20(a) in which the function module installed on each device is located, and in response to the touch and hold operation, a page shown in FIG. 20(b) is entered. That is, a dialog box is popped up in the page shown in FIG. 20(a), where prompt information is displayed in the dialog box to prompt the user whether to uninstall an A1 function on a device A. If the user selects "Yes", the A1 function on the device A is uninstalled; or if the user selects "No", the A1 function on the device A is not uninstalled.

Optionally, a function addition control is further displayed in the page shown in FIG. 20(a). The function addition control may be displayed below the function installed on each device. After the user taps the function addition control, a dialog box is popped up or another page is jumped to. All functions that can be added by the user are displayed in the dialog box or the page jumped to. The user may choose to add one or more functions. Optionally, the function addition control may be displayed in a lower part of the entire page or another blank area.

The function module addition request is used to add a function module to the first device or the subordinate device, and the function module delete request is used to delete a function module from the first device or the subordinate device.

S305: The application management module sends the function module addition/delete request to the distributed installation management module.

After the distributed installation management module receives the function module addition/delete request, if the function module addition/delete request is used to add a function module to/delete a function module from the first device, the distributed installation management module installs an added function module on the first device based on the function module addition request, or deletes a corresponding function module from the first device based on the function module delete request. After the module is successfully added/deleted, the distributed installation management module updates the information of the function module installed on the first device. Optionally, the distributed installation management module sends a function module addition/delete response to the application management module, where the function module addition/delete response is used to notify that the function module is added/deleted successfully. In this embodiment, the distributed installation management module records information of the function modules installed on the devices.

If the module fails to be added to/deleted from the first device, the distributed installation management module does not update the information of the function module installed on the first device. Optionally, the distributed installation management module sends a function module addition/delete response to the application management module, where the function module addition/delete response is used to notify that the function module fails to be added/deleted.

If the function module addition/delete request is used to add a function module to/delete a function module from the subordinate device, step S306 is performed.

S306: The distributed installation management module sends a function module addition/delete request to a subordinate device that needs to add/delete a function.

The function module addition request includes an installation file of the function module to be added, and the function delete request includes an identifier of the function module to be deleted or an installation address of the function module to be deleted.

S307: The subordinate device performs a function module addition/delete operation based on the function module addition/delete request.

The subordinate device parses the installation file of the function module to be added included in the function module addition request, and completes installation of the function module; or deletes or uninstalls the corresponding function module based on the identifier of the function module to be deleted or the installation address of the function module to be deleted included in the function module delete request.

S308: The subordinate device sends a function module addition/delete response to the distributed installation management module.

Optionally, after adding or deleting the corresponding function module, the subordinate device returns the function module addition/delete response to the distributed installation management module, where the function module addition response is used to notify that the module is successfully added or fails to be added, and the function module delete response is used to notify that the module is successfully deleted or fails to be deleted. If the function module addition/delete response indicates that the function module is successfully added to/deleted from the subordinate device, step S309 is performed. If the function module addition/delete response indicates that the function module fails to be added to/deleted from the subordinate device, step S310 is performed.

S309: The distributed installation management module updates information of the function module installed on the subordinate device.

If the function module addition/delete response indicates that the function module is successfully added to/deleted from the subordinate device, the distributed installation management module updates the information of the function module installed on the subordinate device, and after the update, step S310 is performed.

S310: The distributed installation management module sends the function module addition/delete response to the application management module.

According to the method in this embodiment, a function module on each device on which a distributed app is installed can be added or deleted based on a user requirement, to implement flexible management of the distributed app, so that each device can better complete a function of the distributed app.

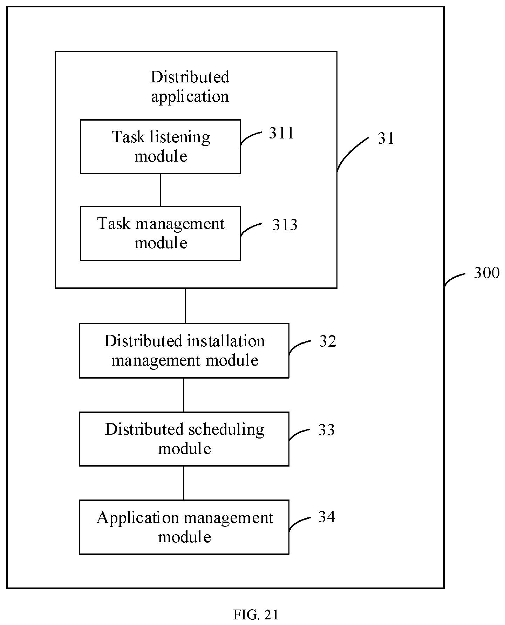

FIG. 21 is a schematic diagram of a structure of a distributed application processing apparatus according to an embodiment of this application. The apparatus 300 provided in this embodiment includes: a distributed application 31, a distributed installation management module 32, and a distributed scheduling module 33, where the distributed application 31 includes a plurality of function modules, the plurality of function modules are installed on a first device and at least one subordinate device, the first device communicates with the at least one subordinate device by using a distributed OS, the first device is a device that downloads an installation file of the distributed application 31, the plurality of function modules include a task listening module 311 and a task processing module 312, the task listening module 311 is installed on the first device, the task processing module 312 is installed on at least one second device, and the second device is a subordinate device.

The task listening module 311 is configured to: listen to a first task processing request entered by a user, where the first task processing request is used to request to process a first task; in response to the first task processing request, query the distributed installation management module 32 for the at least one second device on which the task processing module 312 is installed; and send a second task processing request to the distributed scheduling module 33, where the second task processing request includes information of a target device that processes the first task, and the target device is any device in the at least one second device.

The distributed scheduling module 33 is configured to send a task processing command to the target device in response to the second task processing request.

The task listening module 311 is further configured to receive a processing result of the first task from the target device. In a possible design, the task listening module 311 is further configured to: before sending the second task processing request to the distributed scheduling module 33, when it is found that the task processing module is installed on at least two second devices, display a first interface, where the first interface includes options of the at least two second devices; and send the second task processing request to the distributed scheduling module in response to a first selection operation performed by the user on the options of the at least two second devices, where the first selection operation is used to select the target device.

In a possible design, the task listening module 311 is further configured to: after receiving the processing result of the first task, display the processing result of the first task.

In a possible design, the distributed installation management module 32 is further configured to: determine to perform distributed installation on the distributed application; determine a subordinate device on which the distributed application is installed and a function module of the distributed application installed on the subordinate device; and send the function module of the distributed application to a corresponding subordinate device.

In a possible design, that the distributed installation management module 32 determines to perform distributed installation on the distributed application is specifically as follows: detecting that the installation file of the distributed application includes first indication information, where the first indication information indicates that the distributed application supports a distributed function; and determining, based on the first indication information, to perform distributed installation on the distributed application.

In a possible design, that the distributed installation management module 32 determines to perform distributed installation on the distributed application is specifically as follows: detecting that the installation file of the distributed application includes first indication information, where the first indication information indicates that the distributed application supports a distributed function; displaying a second interface based on the first indication information, where the second interface includes a distributed installation option; and determining, in response to a confirmation operation performed by the user on the distributed installation option, to perform distributed installation on the distributed application.

In a possible design, that the distributed installation management module 32 determines a subordinate device on which the distributed application is installed and a function module of the distributed application installed on the subordinate device is specifically as follows: displaying a third interface, where the third interface includes a candidate device on which the distributed application can be installed and an option of a function module that can be installed on each candidate device; and determining, in response to a second selection operation performed by the user on the function module that can be installed on the candidate device, the subordinate device on which the distributed application is installed and the function module installed on the subordinate device.

In another possible design, that the distributed installation management module 32 determines a subordinate device on which the distributed application is installed and a function module of the distributed application installed on the subordinate device is specifically as follows: displaying a fourth interface, where the fourth interface includes an option of a candidate device on which the distributed application can be installed; determining, in response to a third selection operation performed by the user on the candidate device, the subordinate device on which the distributed application is installed; displaying a fifth interface, where an option of the function module that can be installed on the subordinate device is displayed in the fifth interface; and in response to a fourth selection operation performed by the user on the function module that can be installed on the subordinate device, determining the function module installed on the subordinate device.

In a possible design, the distributed installation management module 32 is further configured to: after sending the function module of the distributed application to the corresponding subordinate device and receiving the installation completion response messages returned by all subordinate devices, confirm that the distributed application is successfully installed; and display a fifth interface, where the fifth interface is used to notify that installation of the distributed application is completed.

In a possible design, the distributed application 31 further includes a task management module 313, the task management module 313 is installed on the first device, and the task management module 313 is configured to: receive a task state query request entered by the user, where the task state query request is used to request to query a state of a task currently processed in the distributed application; in response to the task state query request, query the distributed installation management module 32 for information of the at least one second device on which the task processing module 312 is installed; and send a first connection establishment request to the distributed scheduling module 33 based on the information of the second device, where the first connection establishment request is used to request to establish a connection to the second device. The distributed scheduling module 33 is configured to send a second connection establishment request to the second device. The task management module 313 is further configured to: obtain, by using the connection, the state of the task processed by the second device, and display the state of the task processed by the second device.

In a possible design, the task management module 313 is further configured to: receive a task delete request entered by the user based on the state of the task processed by the second device; and send the task delete request to the second device by using the connection.

In a possible design, the task management module 313 is further configured to: receive a task suspension request entered by the user based on the state of the task processed by the second device; and send the task suspension request to the second device by using the connection.

In a possible design, an application management module 34 is further included, and the application management module 34 is configured to: receive a management request entered by the user; query, in response to the management request, the distributed installation management module 32 for the subordinate device on which the distributed application is installed, the function module installed on the subordinate device, and a function module installed on the first device; and display the subordinate device on which the distributed application is installed and a function module installed on the first device.

In a possible design, the application management module is further configured to: receive a function module addition request entered by the user; and send the function module addition request to the distributed installation management module 32. The distributed installation management module 32 is further configured to: when the function module addition request is used to add a function module to the first device, install the added function module on the first device based on the function module addition request; or when the function module addition request is used to add a function module to a subordinate device, send the function module addition request to the subordinate device to which the function module needs to be added.

In a possible design, the distributed installation management module 32 is further configured to: after installing the added function module on the first device based on the function module addition request, update information of the function module installed on the first device; and send a function module addition response to the application management module.

In a possible design, the distributed installation management module 32 is further configured to: after sending the function module addition request to the subordinate device to which the function module needs to be added, receive a function module addition response sent by the subordinate device; update information of the function module installed on the first device based on the function module addition response; and send the function module addition response to the application management module 34.

In a possible design, the application management module 34 is further configured to: receive a function module delete request entered by the user, and send the function module delete request to the distributed installation management module. The distributed installation management module 32 is further configured to: when the function module delete request is used to delete a function module from the first device, delete the corresponding function module from the first device based on the function module delete request, or when the function module addition request is used to delete a function module from a subordinate device, send the function module delete request to the subordinate device from which the function module needs to be deleted.

In a possible design, the distributed installation management module 32 is further configured to: after deleting the corresponding function module from the first device based on the function module delete request, update information of the function module installed on the first device, and send a function module delete response to the application management module 34.

In a possible design, the distributed installation management module 32 is further configured to: after sending the function module delete request to the subordinate device from which the function module needs to be deleted, receive the function module delete response sent by the subordinate device, update information of the function module installed on the subordinate device based on the function module delete response, and send the function module delete response to the application management module.

In a possible design, the task listening module 311 is further installed on at least one subordinate device.

In a possible design, the task management module 313 is further installed on at least one subordinate device.

The apparatus 300 provided in this embodiment may be configured to perform the method steps performed by the first device (or the master device) mentioned above. Implementation principles and technical effects thereof are similar, and details are not described herein again.

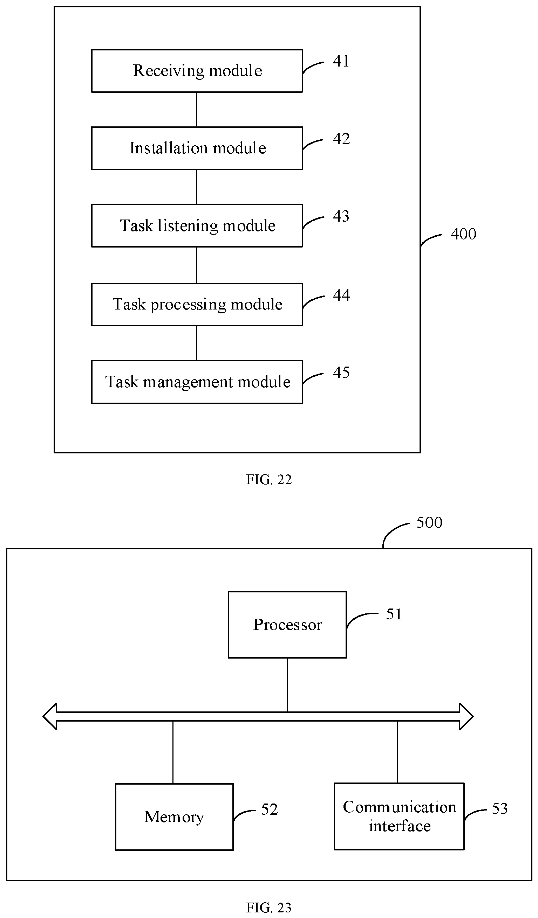

FIG. 22 is a schematic diagram of a structure of a distributed application processing apparatus according to an embodiment of this application. The apparatus 400 provided in this embodiment includes:
a receiving module 41, configured to receive an installation file that is of at least one function module of a distributed application and that is sent by a first device; and
an installation module 42, configured to install the corresponding function module based on the installation file of the at least one function module.

In a possible design, the distributed application includes a task listening module, a distributed installation management module, a task processing module, and a distributed scheduling module, the task listening module 43 is installed on the apparatus 400, the distributed installation management module and the distributed scheduling module are installed on the first device, the task processing module is installed on at least one second device, and the second device is a subordinate device.

The task listening module 43 is configured to: listen to a first task processing request entered by a user, where the first task processing request is used to request to process a first task; in response to the first task processing request, query the distributed installation management module for the at least one second device on which the task processing module is installed; send a second task processing request to the distributed scheduling module, where the second task processing request includes information of a target device that processes the first task, and the target device is any device in the at least one second device; and receive a result of processing the first task by the target device.

In a possible design, the task listening module 43 is further configured to: before sending the second task processing request to the distributed scheduling module, when it is found that the task processing module is installed on at least two second devices, display a first interface, where the first interface includes options of the at least two second devices; and send the second task processing request to the distributed scheduling module in response to a first selection operation performed by the user on the options of the at least two second devices, where the first selection operation is used to select the target device.

In a possible design, the task listening module 43 is further configured to: after receiving the processing result of the first task, display the processing result of the first task.

In a possible design, the distributed application includes a task management module 44, the task management module is installed on the apparatus 400, and the task management module 44 is configured to: receive a task state query request entered by the user, where the task state query request is used to request to query a state of a task currently processed in the distributed application; in response to the task state query request, query the distributed installation management module for information of the at least one second device on which the task processing module is installed; send a first connection establishment request to the distributed scheduling module based on the information of the second device, where the first connection establishment request is used to request to establish a connection to the second device; and obtain, by using the connection, the state of the task processed by the second device, and display the state of the task processed by the second device.

In a possible design, the task management module 44 is further configured to: receive a task delete request entered by the user based on the state of the task processed by the second device; and send the task delete request to the second device by using the connection.

In a possible design, the task management module 44 is further configured to: receive a task suspension request entered by the user based on the state of the task processed by the second device; and send the task suspension request to the second device by using the connection.

In a possible design, the task processing module 45 is installed on the apparatus 400. The task processing module is configured to: receive a task processing command sent by the distributed scheduling module, where the task processing command is used to indicate to process the first task; and process the first task according to the task processing command, and send the processing result of the first task to the distributed scheduling module.

In a possible design, the receiving module 41 is further configured to: receive a function module addition request sent by the distributed installation management module. The installation module 42 is further configured to: install an added function module on the subordinate device based on the function module addition request, and send a function module addition response to the distributed installation management module.

In a possible design, the receiving module 41 is further configured to receive a function module delete request sent by the distributed installation management module. The installation module 42 is further configured to: delete a corresponding function module from the subordinate device based on the function module addition request, and send a function module delete response to the distributed installation management module.

In a possible design, the task listening module is further installed on the first device.

In a possible design, the task management module is further installed on the first device.

The apparatus 400 provided in this embodiment may be configured to perform the method steps performed by the second device (or the subordinate device) mentioned above. Implementation principles and technical effects thereof are similar, and details are not described herein again.

For example, this application provides an electronic device 500, including a processor 51, a memory 52, and a communication interface 53. The memory 52 is configured to store program instructions. The communication interface 53 is configured to communicate with another device. The processor 51 is configured to invoke the program instructions in the memory 52, so that the electronic device 500 performs the distributed application processing method in the foregoing embodiments.

For example, this application provides a chip system. The chip system is applied to an electronic device including a memory, a display, and a sensor. The chip system includes a processor. When the processor executes computer instructions stored in the memory, the electronic device performs the distributed application processing method in the foregoing embodiments.

For example, this application provides a computer-readable storage medium. The computer-readable storage medium stores a computer program. When the computer program is executed by a processor, the electronic device is enabled to implement the distributed application processing method in the foregoing embodiment.

For example, this application provides a computer program product, including executable instructions. The executable instructions are stored in a readable storage medium. At least one processor of an electronic device may read the executable instructions from the readable storage medium. The at least one processor executes the executable instructions, so that the electronic device implements the distributed application processing method in the foregoing embodiments.

In the foregoing embodiments, all or some of the functions may be implemented by using software, hardware, or a combination of software and hardware. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

## Claims

1. A distributed application processing method, wherein the method is performed by a first device, the first device comprises a distributed application, the distributed application comprises a plurality of function modules, a first type of function module in the plurality of function modules is installed on the first device, a second type of function module in the plurality of function modules is installed on a subordinate device, the first device communicates with at least one subordinate device by using a distributed operating system OS, and the first device is a device that downloads an installation file of the distributed application; and
the method comprises:
listening (S101) to a first task processing request, wherein the first task processing request is used to request to process a first task;
determining, one from the at least one subordinate device based on the first task processing request as a target device that processes the first task;
sending (S106) a task processing command to the target device; and
receiving (S107) a result of processing the first task by the target device.

2. The method according to claim 1, wherein the determining, one from the at least one subordinate device as a target device that processes the first task comprises:
displaying a first interface when at least two subordinate devices in the at least one subordinate device can process the first task, wherein the first interface comprises options of the at least two subordinate devices; and
receiving a first selection operation performed by a user on the options of the at least two subordinate devices, and determining a subordinate device corresponding to the first selection operation as the target device.

3. The method according to claim 1 or 2, further comprising:
determining to perform distributed installation on the distributed application;
determining a subordinate device on which the distributed application is to be installed and a function module of the distributed application to be installed on the subordinate device; and
sending an installation file corresponding to the function module of the distributed application to a corresponding subordinate device.

4. The method according to claim 3, wherein the determining to perform distributed installation on the distributed application comprises:
detecting that the installation file of the distributed application comprises first indication information, wherein the first indication information indicates that the distributed application supports a distributed function; and
determining, based on the first indication information, to perform distributed installation on the distributed application.

5. The method according to claim 3, wherein the determining to perform distributed installation on the distributed application comprises:
detecting that the installation file of the distributed application comprises first indication information, wherein the first indication information indicates that the distributed application supports a distributed function;
displaying a second interface based on the first indication information, wherein the second interface comprises a distributed installation option; and
receiving a confirmation operation performed by the user on the distributed installation option, and determining, based on the confirmation operation, to perform distributed installation on the distributed application.

6. The method according to any one of claims 3 to 5, wherein the determining a subordinate device on which the distributed application is to be installed and a function module of the distributed application to be installed on the subordinate device comprises:
displaying a third interface, wherein the third interface comprises a candidate device on which the distributed application can be installed and an option of a function module that can be installed on each candidate device; and
receiving a second selection operation performed by the user on a function module that can be installed on the candidate device, and determining, based on the second selection operation, the subordinate device on which the distributed application is to be installed and the function module to be installed on the subordinate device.

7. The method according to any one of claims 3 to 5, wherein the determining a subordinate device on which the distributed application is to be installed and a function module of the distributed application to be installed on the subordinate device comprises:
displaying a fourth interface, wherein the fourth interface comprises an option of a candidate device on which the distributed application can be installed;
receiving a third selection operation performed by the user on the candidate device, and determining, based on the third selection operation, the subordinate device on which the distributed application is to be installed;
displaying a fifth interface, wherein an option of a function module that can be installed on the subordinate device is displayed in the fifth interface; and
receiving a fourth selection operation performed by the user on the function module that can be installed on the subordinate device, and determining, based on the fourth operation, the function module to be installed on the subordinate device.

8. The method according to any one of claims 3 to 5, wherein after the sending an installation file corresponding to the function module of the distributed application to a corresponding subordinate device, the method further comprises:
when receiving installation completion response messages returned by all subordinate devices, confirming that the distributed application is successfully installed; and
displaying a fifth interface, wherein the fifth interface is used to notify that installation of the distributed application is completed.

9. The method according to any one of claims 1 to 8, wherein the method further comprises:
receiving (S201) a task state query request entered by the user, wherein the task state query request is used to request to query a state of a task currently processed in the distributed application;
determining, from the at least one subordinate device based on the task state query request, a second device having a task processing function;
requesting (S206), from the second device, a state of a task processed by the second device; and
displaying (S207) the state of the task processed by the second device.

10. The method according to claim 9, further comprising:
receiving (S207) a task delete request entered by the user based on the state of the task processed by the second device; and
sending (S208) the task delete request to the second device.

11. The method according to claim 9, further comprising:
receiving a task suspension request entered by the user based on the state of the task processed by the second device; and
sending the task suspension request to the second device.

12. The method according to any one of claims 1 to 11, wherein the method further comprises:
receiving (S301) a management request entered by the user; and
displaying (S303), based on the management request, the subordinate device on which the distributed application is installed and a function module installed on the first device.

13. A distributed application processing method, wherein the method is performed by a subordinate device of a distributed application, the distributed application comprises a plurality of function modules, a first type of function module in the plurality of function modules is installed on a first device, a second type of function module in the plurality of function modules is installed on the subordinate device, the first device is a device that downloads an installation file of the distributed application, and the first device communicates with at least one subordinate device by using a distributed operating system OS; and the method comprises:
receiving (S106) a task processing command sent by the first device, wherein the task processing command is used to indicate to process a first task;
processing (S107) the first task according to the task processing command; and
sending (S108) a processing result of the first task to the first device.

14. An electronic device (500), comprising a memory (52) and a processor (51), wherein
the memory (52) is configured to store program instructions; and
the processor (51) is configured to invoke the program instructions in the memory, to enable the electronic device to perform the distributed application processing method according to any one of claims 1 to 12 or according to claim 13.

15. A computer-readable storage medium having stored thereon a computer program, wherein when the computer program is executed by a processor of an electronic device, the electronic device is enabled to implement the distributed application processing method according to any one of claims 1 to 12 or according to claim 13.

## Patentansprüche

1. Verarbeitungsverfahren für eine verteilte Anwendung, wobei das Verfahren durch eine erste Vorrichtung durchgeführt wird, die erste Vorrichtung eine verteilte Anwendung umfasst, die verteilte Anwendung eine Vielzahl von Funktionsmodulen umfasst, eine erste Art von Funktionsmodul in der Vielzahl von Funktionsmodulen auf der ersten Vorrichtung installiert ist, eine zweite Art von Funktionsmodul in der Vielzahl von Funktionsmodulen auf einer untergeordneten Vorrichtung installiert ist, die erste Vorrichtung mit mindestens einer untergeordneten Vorrichtung durch Verwenden eines verteilten Betriebssystems OS kommuniziert, und die erste Vorrichtung eine Vorrichtung, die eine Installationsdatei der verteilten Anwendung herunterlädt, ist; und das Verfahren umfasst:
Abhören (S101) einer ersten Aufgabenverarbeitungsanforderung, wobei die erste Aufgabenverarbeitungsanforderung verwendet wird, um anzufordern, eine erste Aufgabe zu verarbeiten;
Bestimmen einer von der mindestens einen untergeordneten Vorrichtung basierend auf der ersten Aufgabenverarbeitungsanforderung als eine Zielvorrichtung, die die erste Aufgabe verarbeitet;
Senden (S106) eines Aufgabenverarbeitungsbefehls an die Zielvorrichtung; und
Empfangen (S107) eines Ergebnisses einer Verarbeitung der ersten Aufgabe durch die Zielvorrichtung.

2. Verfahren nach Anspruch 1, wobei das Bestimmen einer von der mindestens einen untergeordneten Vorrichtung als eine Zielvorrichtung, die die erste Aufgabe verarbeitet, umfasst:
Anzeigen einer ersten Schnittstelle, wenn mindestens zwei untergeordnete Vorrichtungen in der mindestens einen untergeordneten Vorrichtung die erste Aufgabe verarbeiten können, wobei die erste Schnittstelle Optionen der mindestens zwei untergeordneten Vorrichtungen umfasst; und
Empfangen eines ersten Auswahlvorgangs, der durch einen Benutzer auf den Optionen der mindestens zwei untergeordneten Vorrichtungen durchgeführt wird, und
Bestimmen einer untergeordneten Vorrichtung, die dem ersten Auswahlvorgang entspricht, als die Zielvorrichtung.

3. Verfahren nach Anspruch 1 oder 2, das ferner umfasst:
Bestimmen, eine verteilte Installation auf der verteilten Anwendung durchzuführen;
Bestimmen einer untergeordneten Vorrichtung, auf der die verteilte Anwendung zu installieren ist, und eines Funktionsmoduls der verteilten Anwendung, das auf der untergeordneten Vorrichtung zu installieren ist; und
Senden einer Installationsdatei, die dem Funktionsmodul der verteilten Anwendung entspricht, an eine entsprechende untergeordnete Vorrichtung.

4. Verfahren nach Anspruch 3, wobei das Bestimmen, die verteilte Installation auf der verteilten Anwendung durchzuführen, umfasst:
Erkennen, dass die Installationsdatei der verteilten Anwendung erste Angabeinformationen umfasst, wobei die ersten Angabeinformationen angeben, dass die verteilte Anwendung eine verteilte Funktion unterstützt; und
Bestimmen, basierend auf den ersten Angabeinformationen, die verteilte Installation auf der verteilten Anwendung durchzuführen.

5. Verfahren nach Anspruch 3, wobei das Bestimmen, die verteilte Installation auf der verteilten Anwendung durchzuführen, umfasst:
Erkennen, dass die Installationsdatei der verteilten Anwendung erste Angabeinformationen umfasst, wobei die ersten Angabeinformationen angeben, dass die verteilte Anwendung eine verteilte Funktion unterstützt;
Anzeigen einer zweiten Schnittstelle basierend auf den ersten Angabeinformationen, wobei die zweite Schnittstelle eine Option für die verteilte Installation umfasst; und
Empfangen eines Bestätigungsvorgangs, der durch den Benutzer auf der Option für die verteilte Installation durchgeführt wird, und Bestimmen, basierend auf dem Bestätigungsvorgang, die verteilte Installation auf der verteilten Anwendung durchzuführen.

6. Verfahren nach einem der Ansprüche 3 bis 5, wobei das Bestimmen einer untergeordneten Vorrichtung, auf der die verteilte Anwendung zu installieren ist, und eines Funktionsmoduls der verteilten Anwendung, das auf der untergeordneten Vorrichtung zu installieren ist, umfasst:
Anzeigen einer dritten Schnittstelle, wobei die dritte Schnittstelle eine Kandidatenvorrichtung, auf der die verteilte Anwendung installiert werden kann, und
eine Option eines Funktionsmoduls, das auf jeder Kandidatenvorrichtung installiert werden kann, umfasst: und
Empfangen eines zweiten Auswahlvorgangs, der durch den Benutzer auf einem Funktionsmodul, das auf der Kandidatenvorrichtung installiert werden kann, durchgeführt wird, und Bestimmen, basierend auf dem zweiten Auswahlvorgang, der untergeordneten Vorrichtung, auf der die verteilte Anwendung zu installieren ist, und des Funktionsmoduls, das auf der untergeordneten Vorrichtung zu installieren ist.

7. Verfahren nach einem der Ansprüche 3 bis 5, wobei das Bestimmen einer untergeordneten Vorrichtung, auf der die verteilte Anwendung zu installieren ist, und eines Funktionsmoduls der verteilten Anwendung, das auf der untergeordneten Vorrichtung zu installieren ist, umfasst:
Anzeigen einer vierten Schnittstelle, wobei die vierte Schnittstelle eine Option einer Kandidatenvorrichtung, auf der die verteilte Anwendung installiert werden kann, umfasst;
Empfangen eines dritten Auswahlvorgangs, der durch den Benutzer auf der Kandidatenvorrichtung durchgeführt wird, und Bestimmen, basierend auf dem dritten Auswahlvorgang, der untergeordneten Vorrichtung, auf der die verteilte Anwendung zu installieren ist;
Anzeigen einer fünften Schnittstelle, wobei eine Option eines Funktionsmoduls, das auf der untergeordneten Vorrichtung installiert werden kann, in der fünften Schnittstelle angezeigt wird; und
Empfangen eines vierten Auswahlvorgangs, der durch den Benutzer auf dem Funktionsmodul, das auf der untergeordneten Vorrichtung installiert werden kann, durchgeführt wird, und Bestimmen, basierend auf dem vierten Vorgang, des Funktionsmoduls, das auf der untergeordneten Vorrichtung zu installieren ist.

8. Verfahren nach einem der Ansprüche 3 bis 5, wobei, nach dem Senden einer Installationsdatei, die dem Funktionsmodul der verteilten Anwendung entspricht, an eine entsprechende untergeordnete Vorrichtung, das Verfahren ferner umfasst:
bei dem Empfangen von Installationsabschlussantwortnachrichten, die durch alle untergeordneten Vorrichtungen zurückgegeben werden, Bestätigen, dass die verteilte Anwendung erfolgreich installiert ist; und
Anzeigen einer fünften Schnittstelle, wobei die fünfte Schnittstelle verwendet wird, um mitzuteilen, dass die Installation der verteilten Anwendung abgeschlossen ist.

9. Verfahren nach einem der Ansprüche 1 bis 8, wobei das Verfahren ferner umfasst:
Empfangen (S201) einer Aufgabenzustandsabfrageanforderung, die durch den Benutzer eingegeben wird, wobei die Aufgabenzustandsabfrageanforderung verwendet wird, um anzufordern, einen Zustand einer Aufgabe, die in der verteilten Anwendung aktuell verarbeitet wird, abzufragen;
Bestimmen, von der mindestens einen untergeordneten Vorrichtung basierend auf der Aufgabenzustandsabfrageanforderung, einer zweiten Vorrichtung, die eine Aufgabenverarbeitungsfunktion aufweist;
Anfordern (S206), von der zweiten Vorrichtung, eines Zustands einer Aufgabe, die durch die zweite Vorrichtung verarbeitet wird; und
Anzeigen (S207) des Zustands der Aufgabe, die durch die zweite Vorrichtung verarbeitet wird.

10. Verfahren nach Anspruch 9, das ferner umfasst:
Empfangen (S207) einer Aufgabenlöschanforderung, die durch den Benutzer eingegeben wird, basierend auf dem Zustand der Aufgabe, die durch die zweite Vorrichtung verarbeitet wird; und
Senden (S208) der Aufgabenlöschanforderung an die zweite Vorrichtung.

11. Verfahren nach Anspruch 9, das ferner umfasst:
Empfangen einer Aufgabenaussetzungsanforderung, die durch den Benutzer eingegeben wird, basierend auf dem Zustand der Aufgabe, die durch die zweite Vorrichtung verarbeitet wird; und
Senden der Aufgabenaussetzungsanforderung an die zweite Vorrichtung.

12. Verfahren nach einem der Ansprüche 1 bis 11, wobei das Verfahren ferner umfasst:
Empfangen (S301) einer Verwaltungsanforderung, die durch den Benutzer eingegeben wird; und
Anzeigen (S303), basierend auf der Verwaltungsanforderung, der untergeordneten Vorrichtung, auf der die verteilte Anwendung installiert ist, und eines Funktionsmoduls, das auf der ersten Vorrichtung installiert ist.

13. Verarbeitungsverfahren für die verteilte Anwendung, wobei das Verfahren durch eine untergeordnete Vorrichtung einer verteilten Anwendung durchgeführt wird, die verteilte Anwendung eine Vielzahl von Funktionsmodulen umfasst, eine erste Art von Funktionsmodul in der Vielzahl von Funktionsmodulen auf einer ersten Vorrichtung installiert ist, eine zweite Art von Funktionsmodul in der Vielzahl von Funktionsmodulen auf der untergeordneten Vorrichtung installiert ist, die erste Vorrichtung eine Vorrichtung, die eine Installationsdatei der verteilten Anwendung herunterlädt, ist, und die erste Vorrichtung mit mindestens einer untergeordneten Vorrichtung durch Verwenden eines verteilten Betriebssystems OS kommuniziert; und das Verfahren umfasst:
Empfangen (S106) eines Aufgabenverarbeitungsbefehls, der durch die erste Vorrichtung gesendet wird, wobei der Aufgabenverarbeitungsbefehl verwendet wird, um anzugeben, eine erste Aufgabe zu verarbeiten;
Verarbeiten (S107) der ersten Aufgabe gemäß dem Aufgabenverarbeitungsbefehl; und
Senden (S108) eines Verarbeitungsergebnisses der ersten Aufgabe an die erste Vorrichtung.

14. Elektronische Vorrichtung (500), die einen Speicher (52) und einen Prozessor (51) umfasst, wobei
der Speicher (52) konfiguriert ist, um Programmanweisungen zu speichern; und
der Prozessor (51) konfiguriert ist, um die Programmanweisungen in dem Speicher aufzurufen, um die elektronische Vorrichtung zu aktivieren, um das
Verarbeitungsverfahren für die verteilte Anwendung nach einem der Ansprüche 1 bis 12 oder nach Anspruch 13 durchzuführen.

15. Computerlesbares Speicherungsmedium, das ein Computerprogramm darauf gespeichert aufweist, wobei, wenn das Computerprogramm durch einen Prozessor einer elektronischen Vorrichtung ausgeführt wird, die elektronische Vorrichtung aktiviert wird, um das Verarbeitungsverfahren für die verteilte Anwendung nach einem der Ansprüche 1 bis 12 oder nach Anspruch 13 zu implementieren.

## Revendications

1. Procédé de traitement d'application distribuée, dans lequel le procédé est réalisé par un premier dispositif, le premier dispositif comprend une application distribuée, l'application distribuée comprend une pluralité de modules de fonction, un premier type de module de fonction dans la pluralité de modules de fonction est installé sur le premier dispositif, un second type de module de fonction dans la pluralité de modules de fonction est installé sur un dispositif subordonné, le premier dispositif communique avec au moins un dispositif subordonné en utilisant un système d'exploitation, OS, distribué et le premier dispositif est un dispositif qui télécharge un fichier d'installation de l'application distribuée ; et
le procédé comprend :
l'écoute (S101) d'une première demande de traitement de tâche, dans lequel la première demande de traitement de tâche est utilisée pour demander le traitement d'une première tâche ;
la détermination d'un dispositif parmi l'au moins un dispositif subordonné sur la base de la première demande de traitement de tâche en tant que dispositif cible qui traite la première tâche ;
l'envoi (S106) d'une commande de traitement de tâche au dispositif cible ; et
la réception (S107) d'un résultat de traitement de la première tâche par le dispositif cible.

2. Procédé selon la revendication 1, dans lequel la détermination d'un dispositif parmi l'au moins un dispositif subordonné en tant que dispositif cible qui traite la première tâche comprend :
l'affichage d'une première interface lorsqu'au moins deux dispositifs subordonnés dans l'au moins un dispositif subordonné peuvent traiter la première tâche, dans lequel la première interface comprend des options des au moins deux dispositifs subordonnés ; et
la réception d'une première opération de sélection réalisée par un utilisateur sur les options des au moins deux dispositifs subordonnés, et la détermination d'un dispositif subordonné correspondant à la première opération de sélection en tant que dispositif cible.

3. Procédé selon la revendication 1 ou 2, comprenant en outre :
le fait de déterminer de réaliser une installation distribuée sur l'application distribuée ;
la détermination d'un dispositif subordonné sur lequel l'application distribuée doit être installée et d'un module de fonction de l'application distribuée à installer sur le dispositif subordonné ; et
l'envoi d'un fichier d'installation correspondant au module de fonction de l'application distribuée à un dispositif subordonné correspondant.

4. Procédé selon la revendication 3, dans lequel le fait de déterminer de réaliser une installation distribuée sur l'application distribuée comprend :
le fait de détecter que le fichier d'installation de l'application distribuée comprend des premières informations d'indication, dans lequel les premières informations d'indication indiquent que l'application distribuée prend en charge une fonction distribuée ; et
le fait de déterminer, sur la base des premières informations d'indication, de réaliser une installation distribuée sur l'application distribuée.

5. Procédé selon la revendication 3, dans lequel le fait de déterminer de réaliser une installation distribuée sur l'application distribuée comprend :
le fait de détecter que le fichier d'installation de l'application distribuée comprend des premières informations d'indication, dans lequel les premières informations d'indication indiquent que l'application distribuée prend en charge une fonction distribuée ;
l'affichage d'une deuxième interface sur la base des premières informations d'indication, dans lequel la deuxième interface comprend une option d'installation distribuée ; et
la réception d'une opération de confirmation réalisée par l'utilisateur sur l'option d'installation distribuée, et le fait de déterminer, sur la base de l'opération de confirmation, de réaliser une installation distribuée sur l'application distribuée.

6. Procédé selon l'une quelconque des revendications 3 à 5, dans lequel la détermination d'un dispositif subordonné sur lequel l'application distribuée doit être installée et d'un module de fonction de l'application distribuée à installer sur le dispositif subordonné comprend :
l'affichage d'une troisième interface, dans lequel la troisième interface comprend un dispositif candidat sur lequel l'application distribuée peut être installée et une option d'un module de fonction qui peut être installée sur chaque dispositif candidat ; et
la réception d'une deuxième opération de sélection réalisée par l'utilisateur sur un module de fonction qui peut être installé sur le dispositif candidat, et la détermination, sur la base de la deuxième opération de sélection, du dispositif subordonné sur lequel l'application distribuée doit être installée et du module de fonction à installer sur le dispositif subordonné.

7. Procédé selon l'une quelconque des revendications 3 à 5, dans lequel la détermination d'un dispositif subordonné sur lequel l'application distribuée doit être installée et d'un module de fonction de l'application distribuée à installer sur le dispositif subordonné comprend :
l'affichage d'une quatrième interface, dans lequel la quatrième interface comprend une option d'un dispositif candidat sur lequel l'application distribuée peut être installée ;
la réception d'une troisième opération de sélection réalisée par l'utilisateur sur le dispositif candidat, et la détermination, sur la base de la troisième opération de sélection, du dispositif subordonné sur lequel l'application distribuée doit être installée ;
l'affichage d'une cinquième interface, dans lequel une option d'un module de fonction qui peut être installé sur le dispositif subordonné est affichée dans la cinquième interface ; et
la réception d'une quatrième opération de sélection réalisée par l'utilisateur sur le module de fonction qui peut être installé sur le dispositif subordonné, et la détermination, sur la base de la quatrième opération, du module de fonction à installer sur le dispositif subordonné.

8. Procédé selon l'une quelconque des revendications 3 à 5, dans lequel après l'envoi d'un fichier d'installation correspondant au module de fonction de l'application distribuée à un dispositif subordonné correspondant, le procédé comprend en outre :
lors de la réception de messages de réponse d'achèvement d'installation renvoyés par tous les dispositifs subordonnés, le fait de confirmer que l'application distribuée est installée avec succès ; et
l'affichage d'une cinquième interface, dans lequel la cinquième interface est utilisée pour notifier qu'une installation de l'application distribuée est achevée.

9. Procédé selon l'une quelconque des revendications 1 à 8, dans lequel le procédé comprend en outre :
la réception (S201) d'une demande d'interrogation d'état de tâche saisie par l'utilisateur, dans lequel la demande d'interrogation d'état de tâche est utilisée pour demander d'interroger un état d'une tâche actuellement traitée dans l'application distribuée ;
la détermination, à partir de l'au moins un dispositif subordonné sur la base de la demande d'interrogation d'état de tâche, d'un second dispositif ayant une fonction de traitement de tâche ;
la demande (S206), au second dispositif, d'un état d'une tâche traitée par le second dispositif ; et
l'affichage (S207) de l'état de la tâche traitée par le second dispositif.

10. Procédé selon la revendication 9, comprenant en outre :
la réception (S207) d'une demande de suppression de tâche saisie par l'utilisateur sur la base de l'état de la tâche traitée par le second dispositif ; et
l'envoi (S208) de la demande de suppression de tâche au second dispositif.

11. Procédé selon la revendication 9, comprenant en outre :
la réception d'une demande de suspension de tâche saisie par l'utilisateur sur la base de l'état de la tâche traitée par le second dispositif ; et
l'envoi de la demande de suspension de tâche au second dispositif.

12. Procédé selon l'une quelconque des revendications 1 à 11, dans lequel le procédé comprend en outre :
la réception (S301) d'une demande de gestion saisie par l'utilisateur ; et
l'affichage (S303), sur la base de la demande de gestion, du dispositif subordonné sur lequel l'application distribuée est installée et d'un module de fonction installé sur le premier dispositif.

13. Procédé de traitement d'application distribuée, dans lequel le procédé est réalisé par un dispositif subordonné d'une application distribuée, l'application distribuée comprend une pluralité de modules de fonction, un premier type de module de fonction dans la pluralité de modules de fonction est installé sur un premier dispositif, un second type de module de fonction dans la pluralité de modules de fonction est installé sur le dispositif subordonné, le premier dispositif est un dispositif qui télécharge un fichier d'installation de l'application distribuée, et le premier dispositif communique avec au moins un dispositif subordonné en utilisant un système d'exploitation, OS, distribué ; et le procédé comprend :
la réception (S106) d'une commande de traitement de tâche envoyée par le premier dispositif, dans lequel la commande de traitement de tâche est utilisée pour indiquer de traiter une première tâche ;
le traitement (S107) de la première tâche selon la commande de traitement de tâche ; et
l'envoi (S108) d'un résultat de traitement de la première tâche au premier dispositif.

14. Dispositif électronique (500), comprenant un mémoire (52) et un processeur (51), dans lequel la mémoire (52) est configurée pour stocker des instructions de programme ; et
le processeur (51) est configuré pour appeler les instructions de programme dans la mémoire, afin d'activer le dispositif électronique pour réaliser le procédé de traitement d'application appliquée selon l'une quelconque des revendications 1 à 12 ou selon la revendication 13.

15. Support de stockage lisible par un ordinateur sur lequel est stocké un programme informatique, dans lequel, lorsque le programme informatique est exécuté par un processeur d'un dispositif électronique, le dispositif électronique est activé pour mettre en œuvre le procédé de traitement d'application distribuée selon l'une quelconque des revendications 1 à 12 ou selon la revendication 13.
